# EUROPEAN PATENT SPECIFICATION

(11) **EP 1 908 707 B1**
(45) Date of publication and mention of the grant of the patent: **08.09.2010**
(21) Application number: 07117717.4
(22) Date of filing: 02.10.2007
(51) Int. Cl.: B65G 27/12, B65G 27/34

(54) **Product transport apparatus**
Produktbeförderungsgerät
Appareil pour le transport de produits

(30) Priority: 04.10.2006 JP 2006273011; 28.02.2007 JP 2007049756; 28.02.2007 JP 2007049757
(43) Date of publication of application: 09.04.2008
(73) Proprietor: Sankyo Seisakusho Co., Tokyo (JP)
(72) Inventor: Kato, Heizaburo, Kikugawa-shi Shizuoka (JP); Kato, Toshinao, Kikugawa-shi Shizuoka (JP)
(74) Representative: Charlton, Peter John

(56) References cited:
- EP-A- 1 607 350
- EP-A- 1 652 796
- EP-A- 1 652 798
- JP-A- 3 192 011

## Description

### BACKGROUND

### Technical Field

The present invention relates to a product transport apparatuses according to the preamble of claim 1, as described in JP-A-03192011.

### Related Art

Product transport apparatuses are known that include a transport section that oscillates in a transport direction and a vertical direction, and an oscillation imparting section that includes a first cam mechanism for oscillating the transport section in the transport direction and a second cam mechanism for oscillating the transport section in the vertical direction, in order to transport a product (See for example Japanese Patent Application Laid-open Publication No. 2006-124111.). The transport section is a device for forming a transport path when transporting a product, and when the transport section oscillates, the product placed on this transport section (more precisely, a transport surface provided at the upper end of the transport section) is transported along the transport path.

There are also product transport apparatuses including a plurality of oscillation imparting sections. In this case, the product is moved on the transport section by oscillating the transport section due to the cooperation of this plurality of oscillation imparting sections.

Now, in order to properly transport a product, it is necessary that the oscillation imparting operation of each of the plurality of oscillation imparting sections is synchronized. Here, if the speed of the oscillations (that is, the number of oscillations) is adjusted individually for each of the plurality of oscillation imparting sections in order to change the transport speed of the product for example, there is a risk that there are shifts in the timing at which each of the oscillation imparting sections impart the oscillations. As a result, the oscillations from each of the oscillation imparting sections are not transmitted properly to the transport section, and it becomes difficult to properly transport a product with the product transport apparatus.

Furthermore, product transport apparatuses are known to include an oscillation plate that oscillates in a transport direction and a vertical direction, in order to linearly transport a product. With such product transport apparatuses, oscillations in the transport direction and the vertical direction are imparted to the oscillation plate with a cammechanism, for example (see for example, Japanese Patent Application Laid-open Publication No. 2006-199416). That is to say, by oscillating the oscillation plate in the transport direction and the vertical direction with a cam mechanism, relative slipping of the products on the oscillation plate with respect to the oscillation plate occurs, and as a result, the products are transported in the transport direction.

Now, the more the area of the surface of the oscillation plate on which the products are placed ("placement surface" hereafter) is expanded, the amount of products that can be placed on the placement surface increases, so that the transport capability of the product transport apparatus is improved. However, when the area of the placement surface is expanded, it becomes difficult for the oscillation plate to oscillate properly. That is to say, since oscillations imparted on the oscillation plate attenuate while being transmitted to each part of the oscillation plate, there is the risk that the oscillations are not transmitted properly, the greater the distance from the point where the oscillations are imparted to the oscillation plate. In particular, the oscillations in the vertical direction attenuate easily, and therefore the oscillations are not transmitted properly, as the distance increases from the point where the oscillations in the vertical direction are imparted. As a result, oscillation irregularities occur in the oscillation plate, and it becomes difficult to transport the products on the placement surface properly.

Furthermore, product transport apparatuses for transporting a product are well known (see for example, Japanese Patent Application Laid-open Publication No. 2006-124111). There are also product transport apparatuses in which the product is subjected to an operation such as an inspection, processing or the like while being transported by the product transport apparatus. In order to perform such operation during the transport of the product, for example, a plurality of transport platforms may be provided in the product transport apparatus, and a long transport path may be formed by combining the plurality of transport platforms. Thus, it becomes possible to ensure the space and time for carrying out the operation on the product during transport.

On the other hand, when each of the transport platforms of the product transport apparatus oscillate, relative slipping of the products on each of the transport platforms with respect to the transport platforms occurs. Utilizing this phenomenon of relative slipping of the products, it becomes possible to transport the products on each of the transport platforms. Moreover, if a plurality of transport platforms are provided, after the products have moved on the transport platforms, they are transferred among the transport platforms. As a result, it becomes possible to transport the products along the transport path formed by the plurality of transport platforms.

If the transport path is formed in this way by a plurality of transport platforms, then each of the transport platforms must be properly oscillated in order to transport the product along this transport path. However, if an oscillation imparting mechanism for imparting oscillations is provided for each transport platform individually in order to oscillate each of the transport platforms, then the number of oscillation imparting mechanisms increases, and also the manufacturing costs of the product transport apparatus becomes relatively high.

EP-A-1652798 discloses an article carrying apparatus which is capable of inhibiting a force that acts on the apparatus due to a vibration being applied to its carry section in order to carry an article. The article carrying apparatus includes: a carry section for linearly restricting a carrying direction of an article to be carried; a cam mechanism for applying a vibration to the carry section by transmitting, to the carry section, a reciprocating linear motion having at least a carrying direction component in the carrying direction, wherein the vibration causes the article (W) to be carried in the carrying direction; an enclosure section for supporting the cam mechanism; and a balancer for inhibiting a force that acts on the enclosure section due to the cam mechanism applying the vibration to the carry section.

### SUMMARY

An advantage of some aspects of the present invention is that it is possible to realize a product transport apparatus with which products can be properly transported.

The invention is, a product transport apparatus comprising:
a transport section that oscillates in a transport direction and a vertical direction in order to transport a product;
a plurality of oscillation imparting sections;
and a single driving source that drives each of the plurality of oscillation imparting sections;
**characterised in that** each of the plurality of oscillation imparting sections has a first cam mechanism for causing the transport section to oscillate in the transport direction and a second cam mechanism (150, 250) for causing the transport section to oscillate in the vertical direction and

An advantage of some aspects of the present invention is that it is possible to realize a product transport apparatus with which products can be properly transported.

Features and objects of the present invention other than the above will become clear by reading the description of the present specification with reference to the accompanying drawings.

### BRIEF DESCRIPTION OF THE DRAWINGS

Fig. 1 is a schematic top view of a product transport apparatus 1.
Fig. 2 is a diagram showing the internal structure of the rotary feeder 100, taken along the sectional plane H-H in Fig. 1.
Fig. 3 is a diagram showing the internal structure of the rotary feeder 100, taken along the sectional plane I-I in Fig. 2.
Fig. 4 is a diagram showing the internal structure of the rotary feeder 100, and shows the periphery of the turret 122.
Fig. 5 is a diagram showing the internal structure of the rotary feeder 100, taken along the sectional plane J - J in Fig. 2.
Fig. 6 is a diagram showing the internal structure of the rotary feeder 100, taken along the sectional plane K - K in Fig. 3.
Fig. 7 is a diagram illustrating a modified example of the lift arm 154.
Fig. 8 is a diagram illustrating the operation of the first cam mechanism 140 and the second cam mechanism 150. Fig. 8A is a diagram showing the state of the first cam mechanism 140 and the second cam mechanism 150 before the input shaft 110 rotates. Fig. 8B is a diagram showing the changed state of the first cam mechanism 140 and the second cam mechanism 150 after the input shaft 110 has rotated.
Fig. 9 is an example of a timing chart of the oscillations imparted by the rotary feeder 100.
Fig. 10 is a diagram illustrating the trajectory of the first transport platform 12 when the first transport platform 12 oscillates in the transport direction and the vertical direction.
Fig. 11 is a diagram illustrating the relative slipping phenomenon of the product W.
Fig. 12 is a diagram showing the internal structure of the linear feeder 200, taken along the sectional plane L - L in Fig. 1.
Fig. 13 is a diagram showing the internal structure of the linear feeder 200, taken along the sectional plane M - M in Fig. 12.
Fig. 14 is a diagram illustrating the reciprocal movement in the vertical direction of the lifting platform 256. Fig. 14A is a diagram showing the state when the lifting platform 256 has reached the upper dead center. Fig. 14B is a diagram showing the state when the lifting platform 256 has reached the lower dead center.
Fig. 15 is a diagram illustrating the relation between the operation of the first cammechanism 240 and the operation of the second cammechanism 250. Fig. 15A is a diagram illustrating that the first cam mechanism 240 does not impede the oscillation in the vertical direction of the output section 220. Fig. 15B is a diagram illustrating that the second cam mechanism 250 does not impede the oscillation in transport direction of the output section 220.
Fig. 16 is a diagram illustrating the trajectory of the second transport platform 14 when the second transport platform 14 oscillates in the transport direction and the vertical direction.
Fig. 17 is a schematic top view of the product transport apparatus 2 according to a first modified example.
Fig. 18 is a schematic top view of the product transport apparatus 3 according to a second modified example.
Fig. 19 is a schematic top view of the product transport apparatus 4 according to a third modified example.
Fig. 20 is a schematic top view of the product transport apparatus 5 according to a fourth modified example.
Fig. 21 is a schematic top view of the product transport apparatus 6 according to a fifth modified example.
Fig. 22 is a view of a modified example of the transmission mechanism of the driving force from the drive motor 300 in the product transport apparatus 6 according to the fifth modified example.

### DESCRIPTION OF EXEMPLARY EMBODIMENTS

At least the following matters will be made clear by the explanation in the present specification and the description of the accompanying drawings.

A product transport apparatus is provided according to claim 1.

With this product transport apparatus, it is possible to transport products more properly.

Moreover, the number of oscillations imparted by each of the plurality of oscillation imparting sections in the transport direction and the vertical direction may be the same among the oscillation imparting sections.

With this configuration, the oscillation imparting operations of the oscillation imparting sections are synchronized by driving each of the plurality of oscillation imparting sections with a single driving source, so that the products can be transported even more properly.

Moreover, each of the plurality of oscillation imparting sections may include
a housing for containing the first cam mechanism and the second cam mechanism;
an input shaft rotatably supported by the housing in order to drive the first cam mechanism and the second cam mechanism, and
an output section that fastens and supports the transport section above the output section, the output section being supported by the housing so that it can oscillate in the transport direction and the vertical direction, and
wherein the first cam mechanism and the second cam mechanism oscillate the output section and the transport section integrally.

In this case, the first cam mechanism and the second cam mechanism oscillate the transport section through an output section. Here, the transport section is fastened to this output section, so that the oscillations generated by the cooperation of the first cam mechanism and the second cam mechanism are properly transmitted through the output section to the transport section.

Moreover, a rotatable first cam of the first cam mechanism and a rotatable second cam of the second cam mechanism are supported by the input shaft, and the first cam and the second cam may rotate integrally with the input shaft.

In this case, it is easy to synchronize the rotation of the first cam and the rotation of the second cam, and it becomes possible to impart to the transport section oscillations with which the product placed on the transport section can be transported more easily.

Moreover, the first cam of each of the plurality of oscillation imparting sections may have such a cam profile that the amplitude in the transport direction of the oscillations imparted by each of the plurality of oscillation imparting sections is the same among the oscillation imparting sections.

The transport speed of the products at the various positions of the transport section depends on the amplitude in the transport direction of the oscillations imparted by the various oscillation imparting sections. Consequently, if the amplitudes in the transport direction of the oscillations imparted by the oscillation imparting sections are the same among the oscillation imparting sections, then it is easy to make the transport speed uniform. As a result, transport irregularities that occur when the transport speed becomes non-uniform at the various positions of the transport section are suppressed.

Moreover, the second cam of each of the plurality of oscillation imparting sections may have such a cam profile that the amplitude in the vertical direction of the oscillations imparted by each of the plurality of oscillation imparting sections is the same among the oscillation imparting sections.

The transport speed depends on the amplitude in the vertical direction of the oscillations imparted by the various oscillation imparting sections. Consequently, if the amplitudes in the vertical direction of the oscillations imparted by the oscillation imparting sections are the same among the oscillation imparting sections, then the transport irregularities are suppressed. Furthermore, it becomes easy to match the phases in the vertical direction at the various positions of the transport section, so that the transport path formed by the transport section is not undulated, and the product can be transported properly.

Moreover, the transport section may include a plurality of transport platforms that are lined up in the transport direction; a gap may be formed between the neighboring transport platforms; and an oscillation imparting section may be provided for each of the plurality of transport platforms.

By synchronizing the oscillation imparting operations of the various oscillation imparting sections, it becomes possible to set the necessary width of the gaps to a short width. As a result, the transfer of the products among the transport platforms is carried out properly, and the effect of the present invention becomes even more significant.

Moreover, the plurality of transport platforms may be lined up in the transport direction such that they form an oval path.

In this case, it becomes possible to ensure a relatively long transport distance while keeping the set-up space for the transport section as small as possible. Therefore, it becomes possible to perform processing and inspections of the products while transporting the product.

Moreover, the transport section may be a rectangular transport platform whose longitudinal direction coincides with the transport direction; and the plurality of oscillation imparting sections may be lined up in a straight line in the longitudinal direction of the transport platform.

If the transport section is a rectangular transport platform, it is necessary to provide a plurality of oscillation sections for preventing deflection in its longitudinal direction. Consequently, the effect of the present invention becomes more significant. Moreover, when deviation in the oscillation imparting operation of the oscillation imparting sections occur, the transport platforms rattles and it become difficult to transport the products properly. Therefore, rattling of the transport platforms can also be suppressed by driving the plurality of oscillation imparting sections with a single driving source.

Moreover, the transport section may be a rectangular transport platform whose transverse direction coincides with the transport direction; and the plurality of oscillation imparting sections may be lined up in a straight line in the longitudinal direction of the transport platform.

Also in this case, due to the object of preventing deflection of the transport platforms, it is necessary to provide a plurality of oscillation sections, so that the effect of the present invention becomes even more significant. Moreover, as noted above, by driving the plurality of oscillation imparting sections with a single driving source, rattling of the transport platforms can be suppressed as well. Furthermore, since the transport section is a transport platform that is wide in the transport direction, it becomes possible to transport a large amount of products at the same time by oscillating the transport section in a state in which the oscillation imparting operations of the oscillation imparting sections are synchronized.

### 1. First Embodiment

### (1) Configuration Example of a Product Transport Apparatus

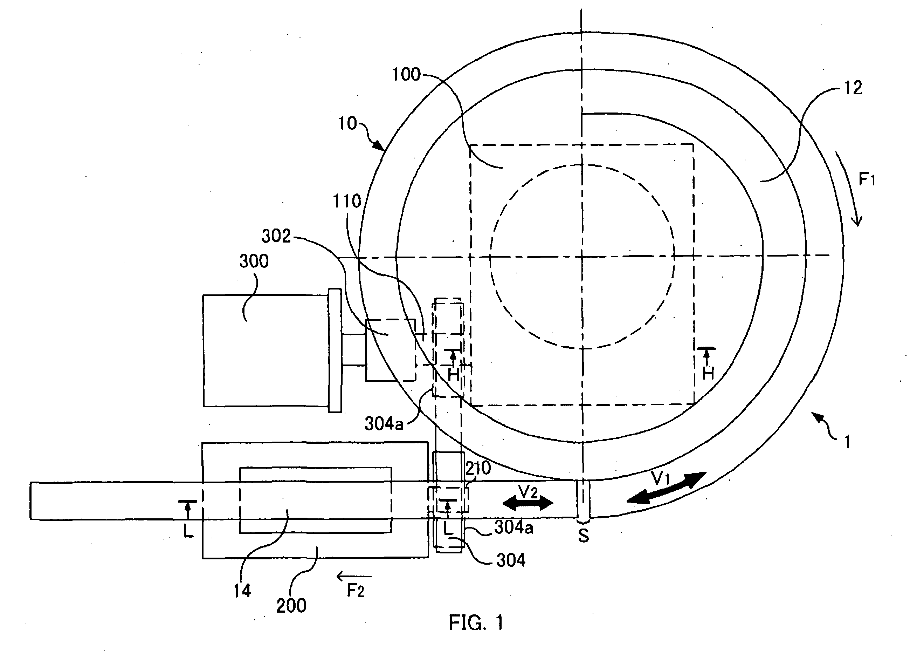

First, a configuration example of a product transport apparatus 1 according to the present embodiment is explained with reference to Fig. 1. Fig. 1 is a schematic top view of this product transport apparatus 1.

As shown in Fig. 1, the product transport apparatus 1 includes a transport section 10, a rotary feeder 100 and a linear feeder 200, which are examples of oscillation imparting sections, and a drive motor 300, which serves as a single driving source. That is to say, the product transport apparatus 1 is provided with a plurality (two in the present embodiment) of oscillation imparting sections. In this product transport apparatus 1, products W placed on the transport section 10 (more specifically, a transport surface that is positioned at the upper end of the transport section 10) are transported in a state in which they are lined up in a predetermined transport direction (the directions of the arrows marked F1 and F2 in Fig. 1), due to the oscillations of the transport section 10. That is to say, the transport section 10 forms a transport path for the products W, and the products W are transported along this transport path. For the transport of the products W, the present embodiment utilizes the phenomenon of relative slipping of the products W with respect to the transport path 10, which occurs when the transport path 10 oscillates in the transport direction and the vertical direction. It should be noted that "product W" is a general term for objects that are transported by the product transport apparatus 1, such as machine components or medical pills or the like. The following is an explanation of the various structural components of the product transport apparatus 1.

### Transport Section 10

### Referring to the above-mentioned Fig. 1, explanation of the transport section 10 will follow.

As shown in Fig. 1, the transport section 10 according to the present embodiment is configured of a bowl-shaped first transport platform 12 and a linear second transport platform 14. That is to say, the transport section 10 according to the present embodiment includes a plurality of transport platforms. Moreover, the first transport platform 12 and the second transport platform 14 are arranged one behind the other in the transport direction of the products W, and together the first transport platform 12 and the second transport platform 14 form a transport path of the products W.

More specifically, the first transport platform 12 forms a transport path for transporting the products W in the circumferential direction of the first transport platform 12, from the bottom of the first transport platform 12 upward. That is to say, the transport path of the first transport platform 12 is restricted to a spiral-shaped transport direction ("spiral-shaped transport path" hereafter). On the other hand, the transport path of the second transport platform 14 forms a path that is restricted to a linear transport direction ("linear transport path" hereafter). Furthermore, as shown in Fig. 1, the first transport platform 12 and the second transport platform 14 are arranged such that the second transport platform 14 is aligned with a tangential direction of the circumference of the first transport platform 12. Moreover, the end of the spiral-shaped transport path and the beginning of the linear transport path are aligned in the transport direction, and a product W that is transported to the end of the spiral-shaped transport path is transferred to the beginning of the linear transport path. It should be noted that the end portion of the spiral-shaped transport path and the linear transport path are aligned in the horizontal direction.

Moreover, a rotary feeder 100 is arranged below the first transport platform 12 and a linear feeder 200 is arranged below the second transport platform 14. The first transport platform 12 is oscillated in the transport direction and the vertical direction by oscillations that are imparted by the rotary feeder 100, whereas the second transport platform 14 is oscillated in the transport direction and the vertical direction by oscillations that are imparted by the linear feeder 200. In other words, the transport section 10 is oscillated in the transport direction and in the vertical direction through cooperation of the rotary feeder 100 and the linear feeder 200. Here, the transport direction of the first transport platform 12 is the circumferential direction of the first transport platform 12 (that is, the circumferential direction along the spiral-shaped transport path, direction V1 in Fig. 1). Further, "oscillation in the transport direction of the first transport platform 12" means a reciprocating movement in the circumferential direction in a plane intersecting with the vertical direction, that is, within the horizontal plane. On the other hand, the transport direction of the second transport platform 14 is the longitudinal direction of the second transport platform 14 (that is, the direction along the linear transport path, direction V2 in Fig. 1). Further, "oscillation in the transport direction of the second transport platform 14" means a reciprocating movement in the longitudinal direction within the horizontal plane.

In a transport section 10 with a configuration mentioned above, before startup of the product transport apparatus 1, the products W are retained at the bottom of the first transport platform 12. When the product transport apparatus 1 is started, the products W move on the first transport platform 12 in a state in which they are lined up along the spiral-shaped transport path, due to the oscillations of the first transport platform 12 in the transport direction and the vertical direction. Then, the products W are transferred from the spirals-shaped transport path to the linear transport path (that is, the products W transferred from the first transport platform 12 to the second transport platform 14) and are moved on the second transport platform 14 in a state in which they are lined up along the linear transport path, brought about by the oscillations of the second transport platform 14 in the transport direction and the vertical direction.

In this respect, the product transport apparatus 1 of the present embodiment can be said to be a combination of a product transport apparatus comprising a transport section forming a spiral-shaped transport path and a product transport apparatus comprising a transport section forming a linear transport path.

As shown in Fig. 1, a gap S is formed between the front end of the first transport platform 12 in the transport direction (that is, the end of the spiral-shaped transport path) and the rear end of the second transport platform 14 in the transport direction (that is, the beginning of the linear transport path). This gap S is provided in order to prevent the first transport platform 12 from colliding with the second transport platform 14 during oscillation. Moreover, the products W that are transported up to the front end of the first transport platform 12 in the transport direction are passed over this gap S and are transferred to the second transport platform 14. It should be noted that in the present embodiment, the width of the gap S in the transport direction is set in consideration of such as the thermal expansion and the influence of inertia of the first transport platform 12 and the second transport platform 14.

### The Rotary Feeder 100

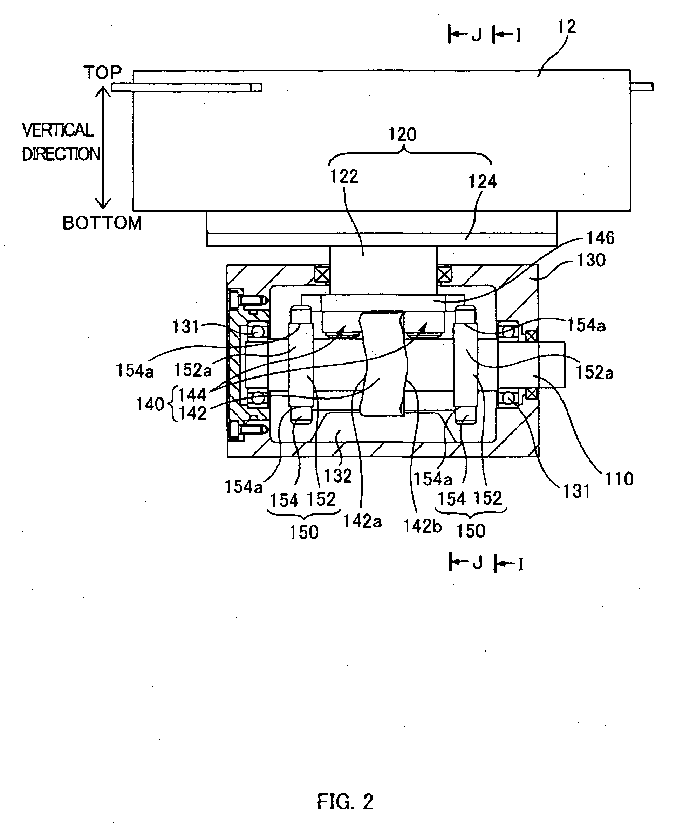

Referring to Figs. 2 to 11, explanation of a configuration example and an operation example of the rotary feeder 100 will follow.

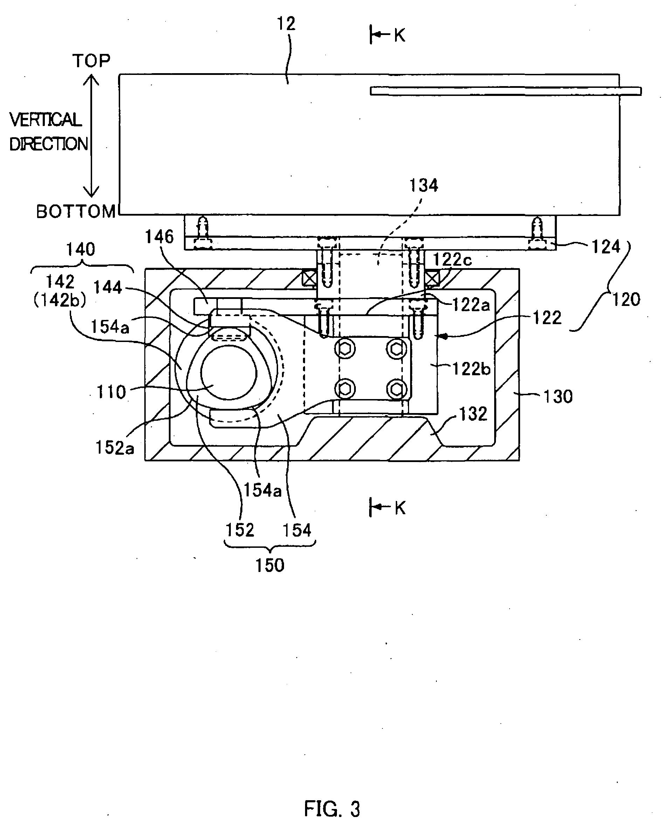

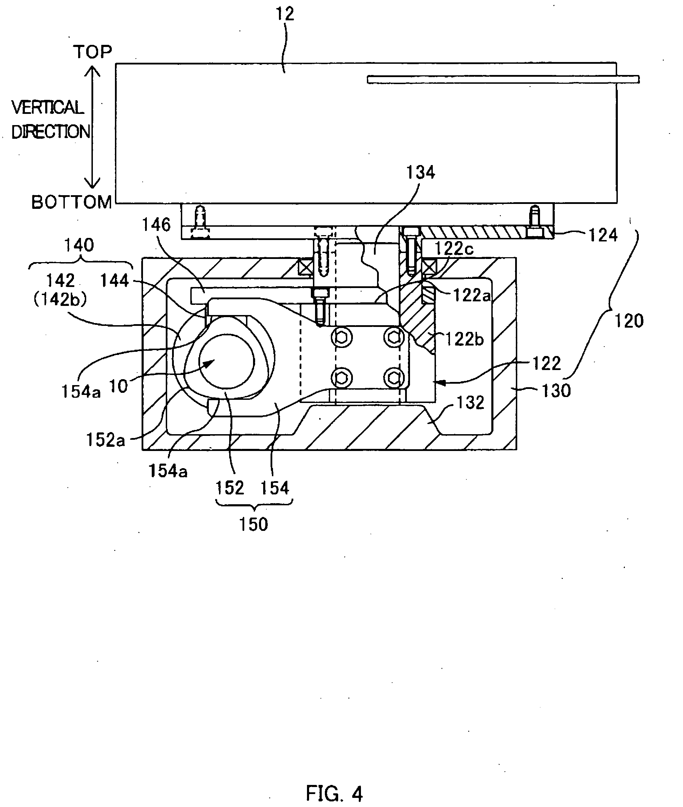

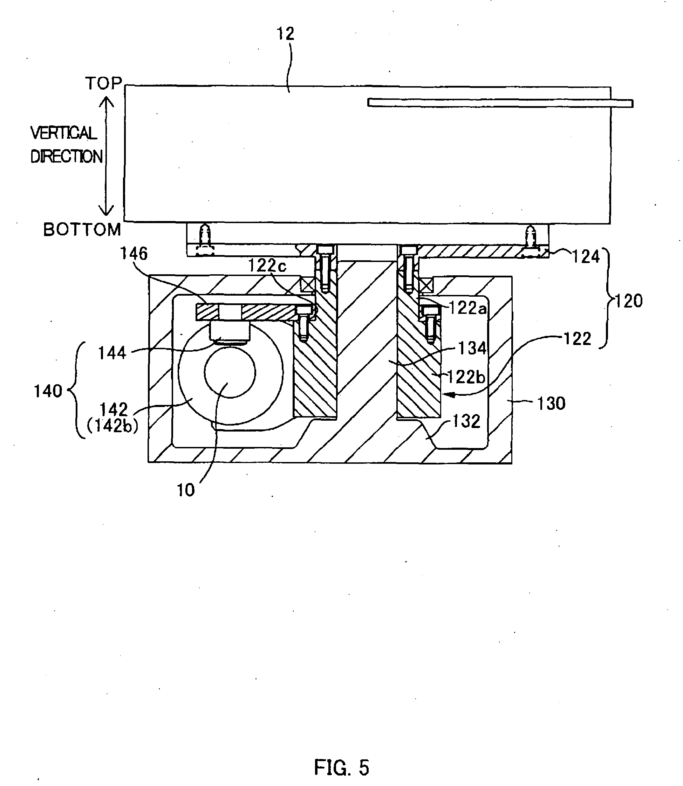

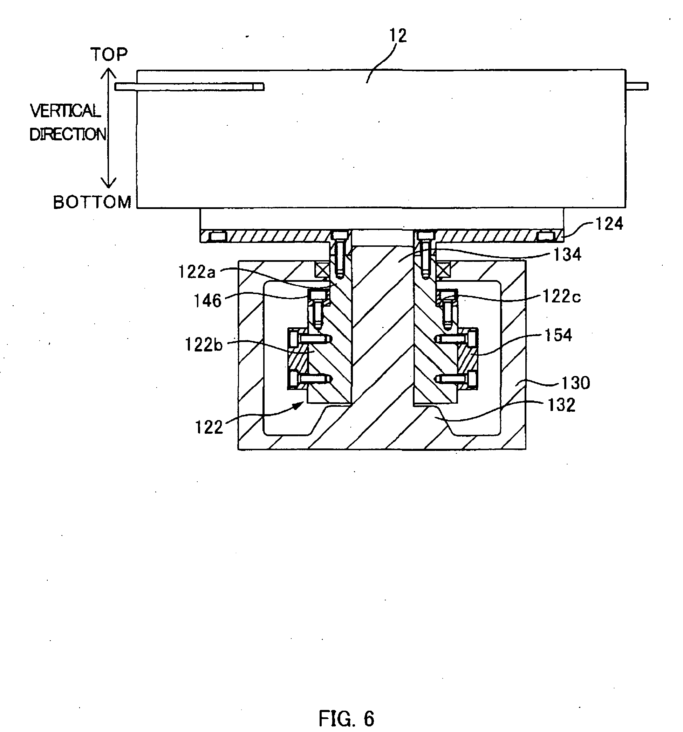

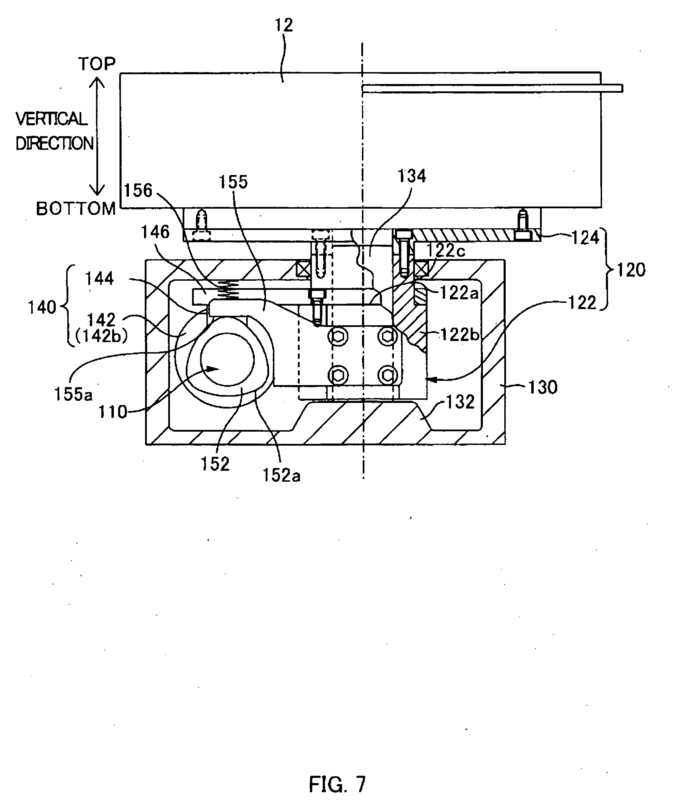

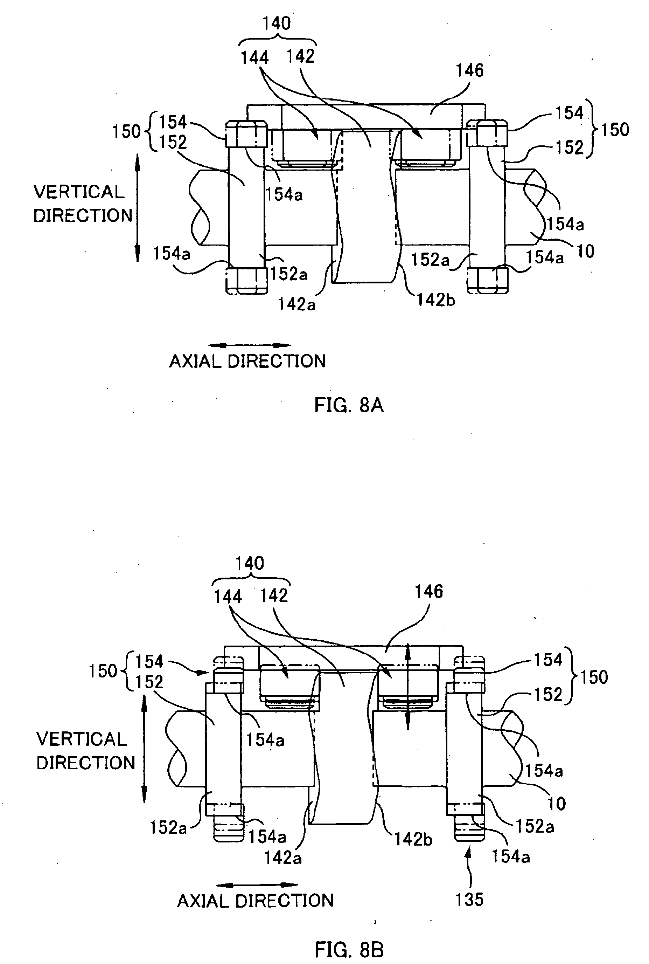

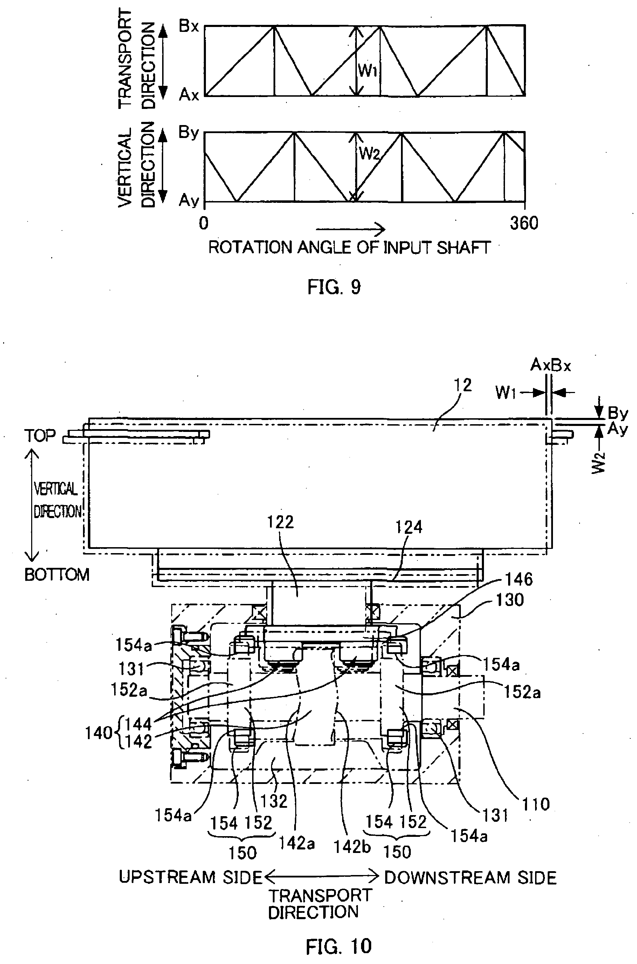

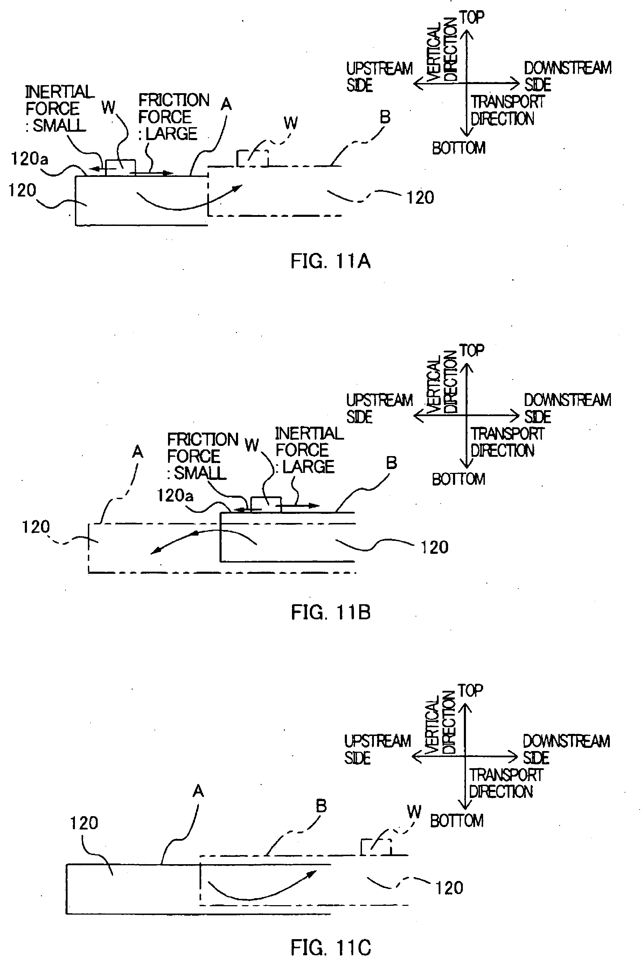

Figs. 2 to 6 are diagrams showing the internal structure of the rotary feeder 100. Fig. 2 is a sectional view along H - H in Fig. 1, Fig. 3 is a sectional view along I - I in Fig. 2, Fig. 4 is a diagram showing the periphery of the turret 122, Fig. 5 is a sectional view along J - J in Fig. 2, and Fig. 6 is a sectional view along K - K in Fig. 3. Note that, in Figs. 2 to 6, cut surfaces are hatched, and Fig. 4 shows a partially different sectional plane for illustrative reasons. Fig. 7 is a diagram illustrating a modified example of a lift arm 154 and is a view corresponding to Fig. 4. Fig. 8 is a diagram illustrating the operation of the first cam mechanism 140 and the second cam mechanism 150. Fig. 8A shows the state of the first cam mechanism 140 and the second cam mechanism 150 before the input shaft 110 rotates, whereas Fig. 8B shows the state wherein the input shaft 110 rotates to drive the first cam mechanism 140 and the second cam mechanism 150. Fig. 9 is an example of a timing chart of the oscillations imparted by the rotary feeder 100 and is a diagram showing the displacement of the first transport platform 12 in the transport direction during one rotation of the input shaft 110 (upper diagram) as well as the displacement of the first transport platform 12 in the vertical direction during one rotation of the input shaft 110 (lower diagram). Fig. 10 is a diagram illustrating the trajectory of the first transport platform 12 when the first transport platform 12 oscillates in the transport direction and in the vertical direction. Fig. 11 is a diagram illustrating the phenomenon of relative slipping of the product W. It should be noted that in Figs. 2 to 7 and 10, arrows indicate the vertical direction of the rotary feeder 100. In Fig. 8, arrows indicate the axial direction and the vertical direction of the input shaft 110. In Fig. 11, arrows indicate the transport direction and the vertical direction of the first transport platform 12.

As shown in Figs. 2 and 3, the rotary feeder 100 includes an input shaft 110, an output section 120, a housing 130, a first cam mechanism 140, and a second cam mechanism 150.

The housing 130 is a substantially box-shaped casing containing the first cam mechanism 140 and the second cam mechanism 150, which are explained later. The housing 130 is arranged below the first transport platform 12. Moreover, a frustum-shaped pedestal section 132 is arranged at the bottom inside the housing 130, as shown in Fig. 3 for example. The housing 130 further includes a columnar support shaft 134 that stands erect on the center portion of the pedestal section 132. As shown in Fig. 6 for example, the upper end of the support shaft 134 protrudes out of the housing 130 through the ceiling wall of the housing 130.

The input shaft 110 is supported rotatably by the housing 130 through a pair of bearings 131. As shown in Fig. 5, the input shaft 110 is arranged close to the turret 122, which is explained later. Moreover, one axial end of the input shaft 110 protrudes out of the housing 130, as shown in Fig. 2 for example. This protruding portion is coupled to the drive motor 300 through a shaft coupling 302, which is explained later. When the drive motor 300 rotates, the input shaft 110 rotates around its center axis.

The output section 120 is supported by the support shaft 134 provided to the housing 130, rotatably around the center axis of the support shaft 134, and reciprocably in the axial direction (that is, the perpendicular direction) of the support shaft 134. Moreover, as shown for example in Fig. 6, this output section includes a hollow cylindrical turret 122, which is supported by the support shaft 134 by fitting the support shaft 134 inside it, and a disk-shaped first transport platform attachment plate 124 fastened to the upper end portion of the turret 122.

The turret 122 is rotatable around the center axis of the support shaft 134 relative to the support shaft 134 and can be reciprocated back and forth in the axial direction of the support shaft 134. As shown in Fig. 6, for example, the turret 122 includes a small diameter section 122a and a large diameter section 122b, which have different outer diameters. The small diameter section 122a is adjacent to the upper end of the large diameter section 122b in the axial direction of the turret 122 (that is, in the axial direction of the support shaft 134). Moreover, the upper end of the small diameter section 122a of the turret 122 protrudes out of the housing 130 through the ceiling wall of the housing 130. It should be noted that a step 122c with a ring-shaped surface, which is perpendicular to the axis of the turret 122, is formed at the border between the small diameter section 122a and the large diameter section 122b of the turret 122, and a swing arm 146, which is a structural component of the later-described first cam mechanism 140, is fastened to this step 122c. Moreover, a lift arm 154, which is a structural component of the later-described second cam mechanism 35, is fastened to the circumferential surface of the large diameter section 122b of the turret 122.

The first transport platform attachment plate 124 supports the first transport platform 12, which is fastened to and supported on the first transport platform attachment plate 124. That is to say, as shown in Fig. 3 for example, the first transport platform 12 is bolted to the first transport platform attachment plate 124 with the bottom wall of the first transport platform 12 abutting against the ceiling wall of the first transport platform attachment plate 124. Moreover, the first transport platform attachment plate 124 is bolted to the upper surface of the small diameter section 122a of the turret 122. Thus, the turret 122, the first transport platform attachment plate 124 and the first transport platform 12 swivel integrally around the support shaft 134, or reciprocate back and forth in the axial direction of the support shaft 134. Here, the swiveling direction when the turret 122, the first transport platform attachment plate 124, and the first transport platform 12 swivel integrally coincides with the circumferential direction of the first transport platform 12, that is, the transport direction of the first transport platform 12. Moreover, the axial direction of the support shaft 134 coincides with the vertical direction. Consequently, the output section 120 is supported by the housing 130 (or more precisely, by the support shaft 134 of the housing 130), through the support shaft 134, in such a manner than it can oscillate integrally with the first transport platform 12 in the transport direction and the vertical direction of the first transport platform 12.

The first cam mechanism 140 lets the first transport platform 12 and the output section 120 oscillate in the transport direction of the products W on the first transport platform 12. As shown in Figs. 2 and 5, the first cam mechanism 140 includes a first cam 142 that rotates as the input shaft 110 rotates, a pair of first cam followers 144 that engage the first cam 142, and a swing arm 146 that swings owing to the cooperation of the first cam 142 and the pair of first cam followers 144.

The first cam 142 is a cylindrical rib cam, and is supported at the center in the axial direction of the input shaft 110. When the input shaft 110 rotates, the first cam 142 rotates integrally with the input shaft 110. Moreover, rib-shaped cam faces 142a and 142b are formed to extend along the entire circumference of the end faces in the axial direction of the first cam 142. The cam faces 142a and 142b are curved with respect to the axial direction of the input shaft 110, the cam face 142a that is formed at one end face in the axial direction has the same curved shape as the cam face 142b that is formed at the other end face in the axial direction. The shape of these cam faces 142a and 142b represents the cam profile of the first cam 142.

The pair of first cam followers 144 abuts against the cam faces 142a and 142b, sandwiching the first cam 142 between them. The swing arm 146, which is a substantially rectangular shaped member, serves as a follower of the first cam 142, and is provided with the pair of first cam followers 144 at its one end in the longitudinal direction. Moreover, one end in the longitudinal direction faces the first cam 142 in the vertical direction with a predetermined gap therebetween, and at this end in the longitudinal direction, the pair of first cam followers 144 is supported such that they can rotate around an axis extending in the vertical direction. It should be noted that the gap between the first cam followers 144 is adjusted such that each of the circumferential surfaces of the pair of first cam followers 144 is in constant contact with the cam faces 142a and 142b of the first cam 142 in a rollable manner. Moreover, the other end in the longitudinal direction of the swing arm 146 includes a fitting hole for fitting the small diameter section 122a of the turret 122 at the center of the other end in the longitudinal direction. The other longitudinal end of the swing arm 146 is bolted to the step 122c of the turret 122 with the small diameter section 122a being fitted into this fitting hole.

With the first cam mechanism 140 configured in this manner, when the input shaft 110 rotates, the first cam 142 rotates integrally with the input shaft 110, and the pair of first cam followers 144 roll while maintaining a state in which they contact the cam faces 142a and 142b, as shown in Figs. 8A and 8B. In this situation, the swing arm 146 swings in a direction.parallel to the axial direction of the input shaft 110, in response to the shape of the curved surfaces of the cam faces 142a and 142b. Moreover, when the swinging of the swing arm 146 is transmitted to the turret 122 to which the swing arm 146 is fastened, the turret 122 swivels around the support shaft 134 integrally with the swing arm 146 (that is to say, the reciprocal movement in the axial direction of the swing arm 146 is converted into a swiveling movement of the turret 122). Then, by swiveling the turret 122 around the support shaft 134 integrally with the first transport platform attachment plate 124, the first transport platform 12 fastened to the first transport platform attachment plate 124 swivels around the support shaft 134 as well. Here, the swiveling direction of the first transport platform 12 coincides with the circumferential direction of the first transport platform 12, that is, the transport direction of the product W on the first transport platform 12. Consequently, the first cam mechanism 140 causes the output section 120 and the first transport platform 12 to oscillate (reciprocate) integrally in the transport direction (in other words, the first cam mechanism 140 generates an oscillation in the transport direction). It should be noted that the swiveling range of the swiveling movement of the turret 122 is sufficiently small, so that this swiveling movement (in other words, the oscillation of the first transport platform 12 in the transport direction) can be regarded as a linear reciprocal movement in the axial direction of the input shaft 110. Therefore, the oscillation in the transport direction with the first cam mechanism 140 provided to the rotary feeder 100 is explained hereafter as an oscillation in the axial direction of the input shaft 110. However, the direction of the oscillation due to the first cam mechanism 140 is not limited to this transport direction. For example, the direction of this oscillation may also have a component other than the transport direction (for example, a component in the vertical direction or a component in a direction that intersects the transport direction and the vertical direction).

The second cam mechanism 150 causes the first transport platform 12 and the output section 120 to oscillate in the vertical direction. As shown in Fig. 4 for example, this second cam mechanism 150 includes a pair of second cams 152 that rotate as the input shaft 110 rotates, and a pair of lift arms 154 that engage the second cams 152.

The pair of second cams 152 are substantially triangular plate cams having a cam face 152a formed on their outer circumferential surface, and the pair of second cams 152 are supported at positions further to the outer side than the position at which the first cam 142 is supported on the input shaft 110. When the input shaft 110 rotates, the pair of second cams 152 rotate integrally with the input shaft 110. Moreover, the cam faces 152a have circumferential surfaces that are flat with respect to the axial direction of the input shaft 110, and the shape of these cam faces 152a represents the cam profile of the second cams 152.

As shown in Figs. 3 and 4, one longitudinal end of each of the pair of lift arms 154 is a plate member that has the shape of a sideways facing "U". The inner surfaces of the portion having the shape of a sideways facing "U" of the lift arms 154 are made to be in constant contact with the cam faces 152a of the second cams 152 so as to engage each of the second cams 152. That is to say, each of the lift arms 154 are provided with second cam followers 154a at the inner surface of the portion having the shape of a sideways facing "U" at the one longitudinal end. The other longitudinal end of the pair of lift arms 154 is bolted to the outer circumferential surface of the large diameter section 122b of the turret 122, such that the two lift arms 154 are parallel to each other. It should be noted that the second cam followers 154a (that is, the upper and the lower face of the inner faces of the portion having the shape of a sideways facing "U") are surfaces that are flat with respect to the axial direction of the input shaft 110, so that they can be in constant contact with the cam faces 152a of the second cam 152.

As shown in Figs. 8A and 8B, with the second cam mechanism 150 configured in an above manner, when the input shaft 110 rotates, the pair of second cams 152 rotate integrally with the input shaft 110. Moreover, the pair of lift arms 154 are moved up and down in the vertical direction in response to the shape of the cam faces of the second cams 152, while the second cam followers 154a are maintained in a state of contact with the cam faces 152a provided to each of the second cams 152 that are in a rotating state. Moreover, when this vertical movement of the pair of lift arms 154 is transmitted to the turret 122 to which the lift arms 154 are fixed, the turret 122 moves up and down in the axial direction (that is, the vertical direction) of the support shaft 134, integrally with the pair of lift arms 154. And by reciprocating the turret 122 in the vertical direction integrally with the first transport platform attachment plate 124, the first transport platform 12 fastened to the first transport platform attachment plate 124 moves up and down in the vertical direction as well. Consequently, the second cam mechanism 150 oscillates (moves up and down) in the vertical direction, integral with the output section 120 and the first transport platform 12. That is to say, the second cam mechanism 150 generates an oscillation in the vertical direction, but the direction of the oscillation brought about by the second cam mechanism 150 is not limited to the vertical direction. For example, the direction of this oscillation may also have a component other than the vertical direction (for example, a component in the axial direction of the input shaft 110).

Now, when the turret 122 swivels around the center axis of the support shaft 134 owing to the driving of the first cam mechanism 140, the pair of lift arms 154 advance straight forward relative to the second cams 152 in the axial direction of the input shaft 110, while a state of contact is maintained between the second cam followers 154a and the cam faces 152a of the second cams 152 (see Fig. 8B). This is because the cam faces 152a of the second cams 152 and the second cam followers 154a both have a flat surface with respect to the axial direction of the input shaft 110. Therefore, the swiveling movement of the output section 120 brought about by the first cam mechanism 140 (that is, the oscillation in the transport direction of the output section 120) does not impede the vertical movement of the output section 120 brought about by the second cam mechanism 150.

On the other hand, when the turret 122 moves vertically in the axial direction of the support shaft 134 (the vertical direction) owing to the driving of the second cam mechanism 150, the swing arm 146 moves in the vertical direction relative to the first cam 142, while a state of contact is maintained between the circumferential faces of the pair of first cam followers 144 and the cam faces 142a and 142b of the first cam 142 (see Fig. 8B). Therefore, the vertical movement of the output section 120 brought about by the second cam mechanism 150 does not impede the swiveling movement of the output section 120 brought about by the first cam mechanism 140.

Consequently, in the present embodiment, the output section 120 and the first transport platform 12 can oscillate simultaneously in two directions, namely the transport direction and the vertical direction. In other words, the output section 120 and the first transport platform 12 oscillate in a compound direction of the transport direction and the vertical direction (hereafter referred to as simply "compound direction").

Moreover, in the present embodiment, one end portion in the longitudinal direction of the lift arm 154 is provided with the shape of a sideways facing "U", but there is no limitation to this. For example, as shown in Fig. 7, it is also possible to use a lift arm whose one end portion in the longitudinal direction is substantially L-shaped (hereafter referred to as "other lift arm 155"). If this different lift arm 155 is used, a biasing member 156, such as a spring, is inserted between the upper end of the other end portion in the longitudinal direction of the different lift arm 155 and the ceiling wall of the housing 130. With the biasing force created by this biasing member 156, the second cam follower 155a (that is, the face of the other lift arm 155 that opposes the second cam 152) formed at the one end portion in the longitudinal direction of the different lift arm 155 is constantly pressed against the cam face 152a of the second cam 152. As a result, like the lift arm 154, the different lift arm 155 performs an up-down movement in the vertical direction.

The following is an explanation of an operation example of the rotary feeder 100 configured as described above.

When the input shaft 110 rotates along with the startup of the drive motor 300, the first cam 142 and the pair of second cams 152 rotate integrally with the input shaft 110, so that the first cam mechanism 140 and the second cam mechanism 150 are driven. Then, owing to the cooperation between the first cam mechanism 140 and the second cam mechanism 150, the first transport platform 12 oscillates in the compound direction, integrally with the output section 120. More specifically, by oscillating in the compound direction integrally with the output section 120, the first transport platform 12 reciprocates back and forth between point A (the position of the first transport platform 12 shown in a broken line in Fig. 10) and point B (the position of the first transport platform 12 shown in a solid line in Fig. 10). It should be noted that point B is at a further downstream side with respect to the transport direction than point A.

Moreover, as shown in Fig. 10, the width of the oscillation in the transport direction which is imparted by the first cam mechanism 140 is marked as W1, and the width of the oscillation in the transport direction which is imparted by the second cam mechanism 150 is marked as W2. Here, since the driving of the first cam mechanism 140 is synchronized with the driving of the second cam mechanism 150, when the first transport platform 12 moves a distance of W1 to the downstream side in the transport direction from point A, it reaches a position at which it is removed by a distance of W2 upward in the vertical direction from point A. In other words, the position Ax of point A in the transport direction and the position Bx of point B in the transport direction are separated from each other by a distance of W1, whereas the position Ay of point A in the vertical direction and the position By of point B in the vertical direction are separated from each other by a distance of W2.

Further, as shown in Fig. 9, in the present embodiment, the rotary feeder 100 oscillates a plurality of times (three times in the present embodiment) in both the transport direction and the vertical direction while the input shaft 110 rotates once, and the cycle of the oscillations in the transport direction is the same as the cycle of the oscillations in the vertical direction. Here, "cycle of oscillations" means the rotation angle of the input shaft 110 when having completed a single reciprocation in the transport direction or the vertical direction. Consequently, the cycle of the oscillations in the compound direction is also the same as the cycle of the oscillations in the transport direction and the cycle of the oscillations in the vertical direction. In other words, while the input shaft 110 rotates once, the number of oscillations in the compound direction that is imparted by the rotary feeder 100 (that is, the number of reciprocations between point A and point B) is three.

Since the first transport platform 12 reciprocates between point A and point B, the phenomenon of relative slipping of the products W placed on the first transport platform 12 occurs in the transport direction. The mechanism by which this phenomenon of relative slipping is generated is already known, and this is caused by the fact that there is a difference between the force of inertia and the friction force acting on products W when the first transport platform 12 moves from point A to point B and when the first transport platform 12 moves from point B to point A.

More specifically, in the present embodiment, the time that is required for the first transport platform 12 to move from point A to point B is longer than the time that is required for the first transport platform 12 to move from point B to point A, as shown in Fig. 9. That is to say, whereas the acceleration when moving forwards in the transport direction is small, the acceleration when moving backwards in the transport direction is large. Thus, as shown in Fig. 11A, when the first transport platform 12 moves from point A to point B, the inertial force acting on a product W such that it is moved to the upstream side in the transport direction becomes small, and relative slipping between the product W and the first transport platform 12 is suppressed. Conversely, as shown in Fig. 11B, when the first transport platform 12 moves from point B to point A, the inertial force acting on the product W such that it is moved to the downstream side in the transport direction becomes large. As a result, relative slipping of the product W is induced, as shown in Fig. 11C.

Moreover, when moving from point A to point B, the rising acceleration in the vertical direction of the first transport platform 12 is increased. In this case, as shown in Fig. 11A, the friction force acting on the product W increases, so that relative slipping is suppressed even more. On the other hand, when moving from point B to point A, the falling acceleration in the vertical direction of the first transport platform 12 increases. In this case, as shown in Fig. 11B, the friction force acting on the product W is reduced, so that the relative slipping of the product W is enhanced.

Owing to this phenomenon of relative slipping, the product W moves toward the downstream side in the transport direction on the first transport platform 12. It should be noted that for the oscillation imparted by the rotary feeder 100, the width W1 and W2 of the oscillations in the transport direction and the vertical direction, as well as the number of oscillations during a single rotation of the input shaft 110 is determined by the shapes (that is, the cam profiles) of the cam faces 142a and 142b of the first cam 142 and the cam faces 152a of the second cams 152. That is to say, each of the cam profiles of the first cam 142 and the second cam 152 are adjusted such that the product W slips relatively to the first transport platform 12 towards the downstream side in the transport direction.

### Regarding the Linear Feeder 200

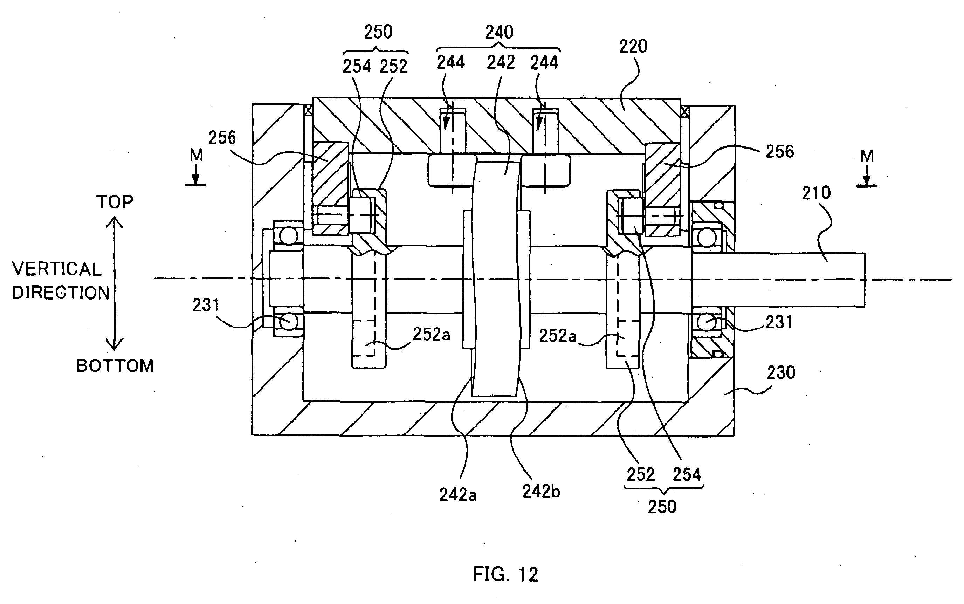

Referring to Figs. 12 to 16, an explanation of a configuration example and an operation example of the linear feeder 200 is to folllow.

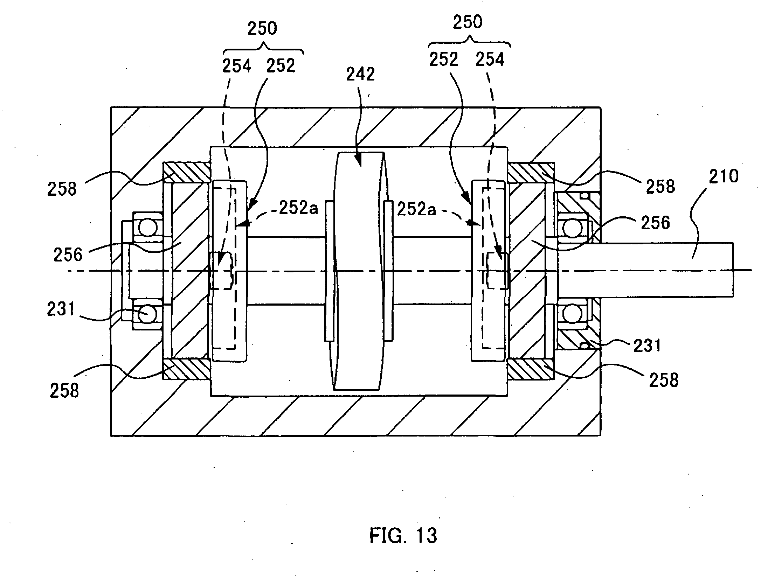

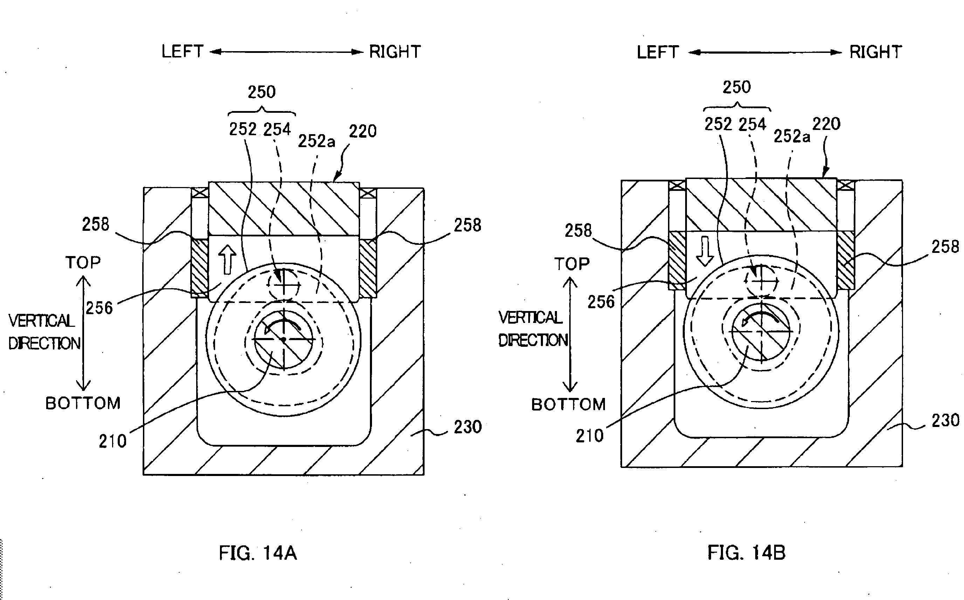

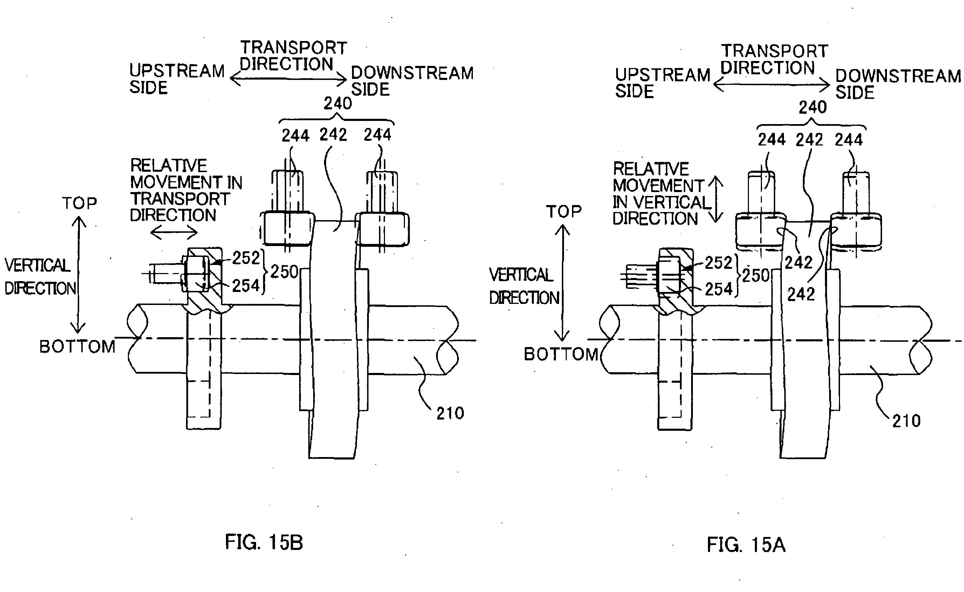

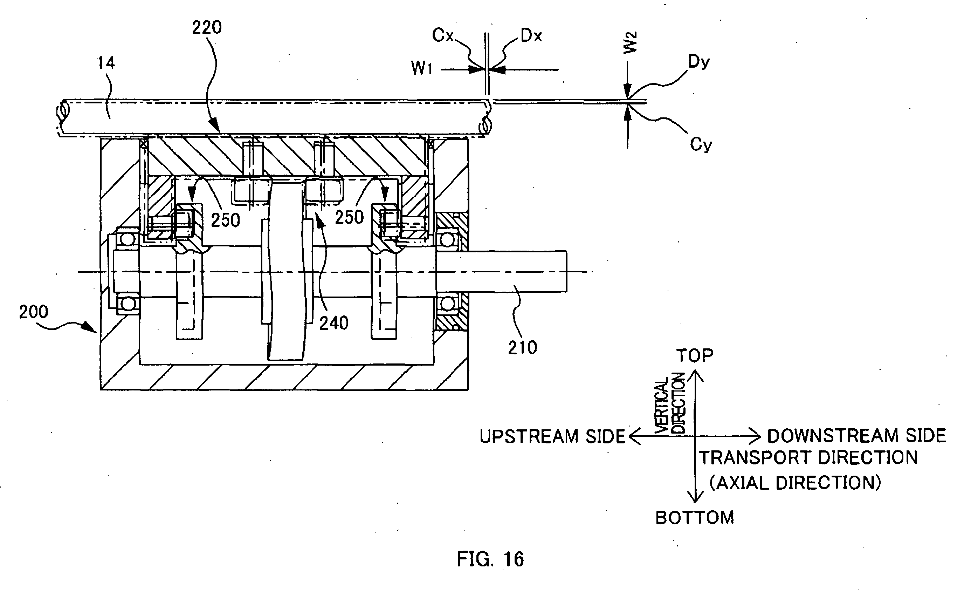

Figs. 12 and 13 are diagrams showing the internal structure of the linear feeder 200. Fig. 12 shows a cross-sectional view along L - L in Fig. 1 and Fig. 13 shows a cross-sectional view along M - M in Fig. 12. It should be noted that in Figs. 12 and 13, cut surfaces are hatched, and Fig. 12 shows a partially different sectional plane than that through L - L for illustrative reasons. Fig. 14 is a diagram illustrating the reciprocal movement in the vertical direction of the lifting platform 256. Fig. 14A is a diagram showing the state when the lifting platform 256 has reached the upper dead center and Fig. 14B is a diagram showing the state when the lifting platform 256 has reached the lower dead center. Fig. 15 is a diagram illustrating the relation between the operation of the first cam mechanism 240 and the operation of the second cam mechanism 250. In Fig. 15, Fig. 15A is a diagram illustrating that the first cam mechanism 240 does not impede the oscillation in the vertical direction of the output section 220, and Fig. 15B is a diagram illustrating that the second cam mechanism 250 does not impede the oscillation in the transport direction of the output section 220. Fig. 16 is a diagram illustrating the trajectory of the second transport platform 14 when the second transport platform 14 oscillates in the transport direction and in the vertical direction. It should be noted that in Figs. 12 and 15, arrows indicate the vertical direction of the linear feeder 200. In Fig. 14, arrows indicate the vertical direction as well as a direction that is perpendicular to the axial direction and the vertical direction of the input shaft 210 (hereafter referred to as "horizontal direction" for the sake of convenience). In Fig. 16, arrows indicate the vertical direction as well as the transport direction of the linear feeder 200. Structural components of the linear feeder 200 that have the same configuration as structural components of the above-described rotary feeder 100 are omittede.

As shown in Figs. 12 and 13, the linear feeder 200 includes an input shaft 210, an output section 220, a housing 230, a first cam mechanism 240. and a second cam mechanism 250, just like the rotary feeder 100.

The housing 230 is arranged below the second transport platform 14, and like the housing 130 of the rotary feeder 100, it is a substantially box-shaped casing containing the first cam mechanism 240 and the second cam mechanism 250 therein, which are explained hereafter. Moreover, a substantially rectangular opening is provided in the ceiling wall of the housing 230.

The input shaft 210 has a similar configuration to the input shaft 110 of the rotary feeder 100.

The output section 220 is arranged at a position that blocks the opening provided in the ceiling wall of the housing 230, and is a rectangular plate member that is smaller than the opening. This output section 220 is supported reciprocably in the axial direction of the input shaft 210 and in the vertical direction at the upper end portion of the housing 130. Moreover, the output section 220 firmly supports the second transport platform 14, with the ceiling wall of the output section 220 abutting against the lower wall of the second transport platform 14. That is to say, in the linear feeder 200, the output section 220 fulfills the same function as the first transport platform attachment plate 124 of the rotary feeder 100.

The first cam mechanism 240 oscillates the second transport platform 14 and the output section 220 in the transport direction. As shown in Figs. 12 and 13, the first cam mechanism 240 includes a first cam 242 that rotates as the input shaft 210 rotates, and a pair of first cam followers 244 that mutually engage the first cam 242.

The first cam 242 has a similar configuration as the first cam 142 of the rotary feeder 100, is supported at the axial center portion of the input shaft 210, and can rotate integrally with the input shaft 210.

Also the pair of first cam followers 244 has a similar configuration as the first cam followers 144 of the rotary feeder 100 and are supported directly at the bottom of the output section 220.

With such a first cam mechanism 240, when the input shaft 210 rotates, the first cam 242 rotates integrally with the input shaft 210, and the pair of first cam followers 244 roll while staying in contact with the cam faces 242a and 242b. In this situation, the output section 220 reciprocates back and forth integrally with the second transport platform 14 in the axial direction of the input shaft 210, in response to the shape of the curved surfaces of the cam faces 242a and 242b. Here, the second transport platform 14 is fastened to the output section 220 in such a manner that the transport direction of the product W on the second transport platform 14 is parallel to the axial direction of the input shaft 210. Therefore, the first cam mechanism 240 lets the output section 220 and the second transport platform 14 oscillate (reciprocate) integrally in the transport direction (in other words, the first cam mechanism 240 causes an oscillation in the transport direction). It should be noted that in the following explanations, the oscillation in the transport direction brought about by the first cam mechanism 240 of the linear feeder 200 is explained as an oscillation in the axial direction of the input shaft 210. However, the direction of the oscillations brought about by the first cam mechanism 240 is not limited to the transport direction. For example, the direction of the oscillations may also have a component other than the transport direction (for example, a component in the vertical direction or the like).

The second cam mechanism 250 is for letting the second transport platform 14 and the output section 220 oscillate in the vertical direction. As shown in Figs. 12 and 13, the second cam mechanism 250 includes a pair of second cams 252 that rotate as the input shaft 210 rotates, second cam followers 254 that engage with each of the second cams 252, a pair of lifting platforms 256 provided with the second cam followers 254 and moving up and down in the vertical direction, and guide members 258 guiding the lifting platforms 256 up and down in the vertical direction.

The pair of second cams 252 are tubular groove cams having a ring-shaped groove 252a formed at the surface on the side facing the lifting platform 256 (hereafter referred to as "opposing surface"), and are supported at positions that are further outward than the position at which the first cam 242 of the input shaft 210 is supported. When the input shaft 210 is rotated, the pair of second cams 252 is rotated integrally with the input shaft 210. Moreover, the ring-shaped grooves 252a are formed on the opposing surfaces of each of the second cams 252, such that they enclose the input shaft 210, and the inner circumferential surfaces of the ring-shaped grooves 252a form cam faces. That is to say, the inner circumferential surface of the ring-shape grooves 252a represents the cam profile of the second cam 252. It should be noted that the inner circumferential surface of the ring-shaped grooves 252a serves as a flat circumferential surface with respect to the axial direction of the input shaft 210.

The second cam followers 254 have the same configuration as the first cam followers 244. Moreover, the second cam followers 254 are supported rotatably at the lower end portion of the lifting platforms 256, with the rotation axis of the second cam followers 254 coinciding with the axial direction of the input shaft 210. Moreover, the second cam followers 254 engage the ring-shaped grooves 252a, with the outer circumferential surface of the second cam followers 254 being in a state of constant contact with the inner circumferential surface (that is, the cam face) of the ring-shaped grooves 252a.

The pair of lifting platforms 256 are respectively rectangular solid-shaped members that are followers of each of the second cams 252 and are attached to the lower end portion of the output section 220. As shown in Figs. 12 and 13, the lifting platforms 256 are provided respectively at the two end portions in the longitudinal direction of the housing 230 (that is, in the direction of the housing 230 that coincides with the transport direction). Moreover, as shown in Fig. 13, the two end faces in the horizontal direction of the lifting platforms 256 form flat surfaces with respect to the axial direction and the vertical direction.

As shown in Figs. 13 and 14, the guide members 258 are rectangular solid-shaped members that are arranged between the end face in the horizontal direction of the lifting platforms 256 and the inner walls of the housing 230. The faces of the guide members 258 that oppose the end faces of each of the lifting platforms 256 are flat faces with respect to the vertical direction and the axial direction of the input shaft 210. The lifting platforms 256 move up and down along the faces of the guide members 258 that oppose the end faces of the lifting platforms 256. That is to say, the guide members 258 cause the lifting platforms 256 to move in a two-dimensional plane given by the vertical direction and the axial direction of the input shaft 210. In other words, the movement of the lifting platforms 256 in the horizontal direction is restricted by the guide members 258. It should be noted that a gap is provided between the lifting platforms 256 and the guide members 258, and an oil film for lubricating the movement of the lifting platforms 256 is formed in this gap.

With the second cam mechanism 250 configured in this way, when the input shaft 210 rotates, the pair of second cams 252 rotates integrally with the input shaft 210, and as the second cams 252 rotate, the second cam followers 254 roll along the inner circumferential surface of the ring-shaped groove 252a of the second cams 252. Moreover, the second cam followers 254 move up and down in the vertical direction, in response to the shape of the ring-shaped groove 252a. As shown in Figs. 14A and 14B, the pair of lifting platforms 256 provided with the second cam followers 254 each move up and down in the vertical direction, while their movement in the horizontal direction is restricted by the guide members 258. Thus, as a result of the output section 220, to which the pair of lifting platforms 256 is attached, moving up and down, the second transport platform 14 that is fastened to the output section 220 also moves up and down in the vertical direction. That is to say, the second cam mechanism 250 causes the output section 220 and the second transport platform 14 to oscillate integrally in the vertical direction (i.e. move up and down). In other words, the second cam mechanism 250 causes an oscillation in the vertical direction, but the direction of the oscillation brought about by the second cam mechanism 250 is not limited to the vertical direction. For example, the direction of the oscillation may also have a component other than the vertical direction (for example, a component in the transport direction or a component in the horizontal direction).

Now, due to the driving of the first cam mechanism 240, also the second cam followers 254 that are provided to the lifting platforms 256 are also moved in the transport direction when the output section 220 reciprocates back and forth in the transport direction. That is to say, the second cam followers 254 advance straight forward in the transport direction relative to the second cams 252 (see Fig. 15A) while the second cam followers 254 stay engaged with the ring-shaped grooves 252a (in other words, the second cam followers 254 maintain a state of contact with the inner circumferential faces of the ring-shaped grooves 252a, that is, the cam faces). Accordingly, the reciprocating movement of the output section 220 in the transport direction brought about by the first cam mechanism 240 does not impede the vertical operation of the output section 220 brought about by the second cam mechanism 250.

On the other hand, when the output section 220 moves up and down in the vertical direction owing to the driving of the second cam mechanism 250, the pair of first cam followers 244 moves relatively to the first cam 242 in the vertical direction while the pair of first cam followers 244 maintains a state of contact with the cam faces 242a and 242b of the first cam 242 (see Fig. 15B). Accordingly, the vertical movement of the output section 220 brought about by the second cam mechanism 250 does not impede the reciprocating movement of the output section 220 in the transport direction brought about by the first cam mechanism 240.

Consequently, in the present embodiment, the output section 220 and the second transport platform 14 can oscillate simultaneously in two directions, namely the transport direction and the vertical direction. In other words, the output section 220 and the second transport platform 14 can oscillate in a compound direction of the transport direction and the vertical direction (hereafter referred to as simply "compound direction").

An explanation of an operation example of the linear feeder 200 configured as above will follow.

At the linear feeder 200, as in the rotary feeder 100, when the drive motor 300 is started, the input shaft 210 rotates so that the first cammechanism 240 and the second cammechanism 250 are driven. Then, owing to the cooperation of the first cam mechanism 240 and the second cam mechanism 250, the second transport platform 14 oscillates in the compound direction, integrally with the output section 220. To explain this in more detail, by oscillating in the compound direction integrally with the output section 220, the second transport platform 14 reciprocates back and forth between point C (the position of the second transport platform 14 shown in a broken line in Fig. 16) and point D (the position of the second transport platform 14 shown in a solid line in Fig. 16). It should be noted that point D is at a further downstream side with respect to the transport direction than point C.

As shown in Fig. 16, the width of the oscillation in the transport direction that is imparted by the first cam mechanism 240 is marked as W1, and the width of the oscillation in the transport direction that is imparted by the second cam mechanism 250 is marked as W2. That is to say, the widths of the oscillations imparted by the linear feeder 200 in the transport direction and the vertical direction are the same as the widths of the oscillations imparted by the rotary feeder 100.

Moreover, since the driving of the first cam mechanism 240 is synchronized with the driving of the second cam mechanism 250, when the second transport platform 14 moves just a distance of W1 to the downstream side in the transport direction from point C, it reaches a position at which it is removed just by a distance of W2 upward in the vertical direction from point C. In other words, the position Cx of point C in the transport direction and the position Dx of point D in the transport direction are separated from each other just by a distance of W1, whereas the position Cy of point C in the vertical direction and the position Dy of point D in the vertical direction are separated from each other just by a distance of W2.

Furthermore, a timing chart of the oscillation imparted by the linear feeder 200 (not shown) is substantially the same as that of the oscillation imparted by the rotary feeder 100. That is to say, also in the linear feeder 200, the cycle of the oscillation in the transport direction is the same as the cycle of the oscillation in the vertical direction. Moreover, the number of oscillations in the compound direction that are imparted by the linear feeder 200 during a single rotation of the input shaft 210 of the linear feeder 200 (that is, the number of reciprocations between point C and point D) is the same as the number of oscillations in the compound direction that are imparted by the rotary feeder 100 during a single rotation of the input shaft 110 of the rotary feeder 100, namely three in the present embodiment.

Since the second transport platform 14 reciprocates between point C and point D, the phenomenon of relative slipping in the transport direction of the products W placed on the second transport platform 14 occurs, by which the products W are moved downstream in the transport direction on the second transport platform 14. The principle of this phenomenon of relative slipping has already been explained above. It should be noted that also for the oscillations imparted by the linear feeder 200, the width W1 and W2 of the oscillations in the transport direction and the vertical direction, as well as the number of oscillations during a single rotation of the input shaft 210 is determined by the shapes (that is, the cam profiles) of the cam faces 242a and 242b of the first cam 242 and the ring-shaped grooves 252a of the second cam 252.

Furthermore, as mentioned above, the width of the oscillations imparted by the linear feeder 200 in both the transport direction and the vertical direction is the same as the width of the oscillations imparted by the rotary feeder 100. That is to say, in the present embodiment, the cam profiles of the first cams 142 and 242 of each of the rotary feeder 100 and the linear feeder 200 are adjusted such.that their amplitudes in the transport direction are the same for the rotary feeder 100 and the linear feeder 200. Similarly, the cam profiles of the second cams 152 and 252 of each of the rotary feeder 100 and the linear feeder 200 are also adjusted to have the same amplitude in the vertical direction. Here, "amplitude" means a value of half the width of the oscillations (in other words, the reciprocation distance of the first transport platform 12 and the second transport platform 14 in each direction of the transport direction and the vertical direction).

### The Drive Motor 300

The drive motor 300 is a motor for driving both the rotary feeder 100 and the linear feeder 200 (more specifically, for rotatively driving the input shaft 110 of the rotary feeder 100 and the input shaft 210 of the linear feeder 200). That is to say, in the present embodiment, the rotary feeder 100 and the linear feeder 200 utilize the drive motor 300 as a common driving source. Moreover, the input shaft 110 of the rotary feeder 100 and the input shaft 210 of the linear feeder 200 are coupled to the drive shaft of the drive motor 300 via a shaft coupling 302 or a belt transmission 304. More specifically, the input shaft 110 of the rotary feeder 100 is directly coupled to the drive shaft of the drive motor 300 via the shaft coupling 302. And the input shaft 110 of the rotary feeder 100 is provided with a pulley 304a, whereas a pulley 304a forming a pair with the pulley 304a is provided on the input shaft 210 of the linear feeder 200. Moreover, a belt is suspended over this pair of pulleys 304a (in other words, a belt transmission 304 is provided in order to transmit the driving force from the drive motor 300 to the linear feeder 200).

With this configuration, it is possible to transmit the drive force from a single drive motor 300 to both the rotary feeder 100 and the linear feeder 200. It should be noted that in the present embodiment, each of the pulleys 304a have the same diameter. Therefore, the input shafts 110 and 210 of the rotary feeder 100 and the linear feeder 200 have the same number of revolutions per unit time. Moreover, as explained above, also the number of oscillations in the compound direction that is imparted while the input shafts 110 and 210 rotate once is the same for the rotary feeder 100 and the linear feeder 200. Consequently, the number of oscillations in the compound direction imparted by the rotary feeder 100 and the linear feeder 200 (the number of oscillations per unit time) is the same for the rotary feeder 100 and the linear feeder 200.

However, the configuration for ensuring that the number of oscillations in the compound direction is the same for the rotary feeder 100 and the linear feeder 200 is not limited to the above-described configuration. For example, if the number of oscillations in the compound direction that is imparted while the input shafts 110 and 210 rotate once is different for the rotary feeder 100 and the linear feeder 200, the ratio of diameters of the pair of pulleys 304a (that is, the gear reduction ratio) may be adjusted. To give a specific example, this is explained for the case that, while the input shafts 110 and 210 rotate once, the number of oscillations in the compound direction imparted by the rotary feeder 100 is three and the number of oscillations in the compound direction imparted by the linear feeder 200 is four. In this case, if the diameter of the pulley 304a provided on the side of the input shaft 110 of the rotary feeder 100 is designed to 3/4 the diameter of the pulley 304a provided on the side of the input shaft 210 of the linear feeder 200, the number of oscillations in the compound direction imparted by each of the rotary feeder 100 and the linear feeder 200 will be the same.

### (1) Advantageous Effects of the Product Transport Apparatus According to the Present Embodiment

As explained above, in order to transport a product, the product transport apparatus 1 according to the present embodiment includes a transport section 10 that oscillates in a transport direction and a vertical direction, a rotary feeder 100 and a linear feeder 200 serving as oscillation imparting sections including a first cam mechanism for letting the transport section 10 oscillate in the transport direction and a second cam mechanism for letting the transport section 10 oscillate in a the vertical direction, and a single drive motor 300 that drives the rotary feeder 100 as well as the linear feeder 200. With a product transport apparatus 1 configured in an above manner, the operation of imparting an oscillation with the rotary feeder 100 can be easily synchronized with the operation of imparting an oscillation with the linear feeder 200. In the following, the advantageous effects of the product transport apparatus 1 according to the present embodiment are explained.

Conventionally, various product transport apparatuses have been proposed in which products W are placed on an oscillating transport section and that transport the products W in the transport direction using the phenomenon of relative slipping with respect to the transport section of the products W. Among those product transport apparatuses, there are some that are provided with a plurality of oscillation imparting sections for imparting an oscillation on the transport section, as explained in the Related Art section.

Now, generally known as oscillation imparting sections are such as electro-magnetic oscillation imparting sections that impart oscillations using an electromagnet and cam-type oscillation imparting sections that impart oscillations using a cam mechanism.

Here, in the product transport apparatus comprising a plurality of electromagnetic oscillation imparting sections, the driving frequencies of the electromagnets with which the oscillation imparting sections are provided have to be adjusted such that the transport sections are suitably oscillated. However, this adjustment of the driving frequencies is troublesome and it is difficult to match the timing at which each of the oscillation imparting sections impart the oscillations. Therefore, if the driving frequencies are to be readjusted for the purpose of changing for example the transport speed of the product transport apparatus, a large amount of time and effort becomes necessary.

On the other hand, with a product transport apparatus including a plurality of cam-type oscillation imparting sections, an oscillation corresponding to the shape of the cams (that is, the cam profiles) provided in each of the oscillation imparting sections is imparted, so that it is not necessary to perform an operation such as adjusting the driving frequencies of the electromagnetic oscillation imparting sections. Moreover, it is possible to change the transport speed of the product transport apparatus through a relatively easy manipulation (for example, adjusting the number of rotations per unit time of the input shaft). It should be noted, however, that even with cam-type oscillating imparting sections, if there is provided a plurality of oscillation imparting sections, it is necessary to synchronize the oscillation imparting operations of each of the oscillation imparting sections.

Here, for the oscillations imparted by each of the plurality of oscillation imparting sections, if the number of oscillations is adjusted individually for each of the oscillation imparting sections, there is the possibility of shifts in the timing at which oscillations are imparted by each of the oscillation imparting sections. As a result, since the oscillations imparted by the plurality of oscillation imparting sections are transmitted to the transport section 10 in a disorderly manner, there is the risk that the product W placed on the transport section 10 is not properly transported. In particular, if the transport section includes a plurality of transport platforms that are lined up in the transport direction, and a gap S is formed between adjacent transport platforms (see for example Fig. 1), then the above problem becomes more conspicuous. Explaining this in more detail, if the oscillation numbers for the oscillations imparted by the oscillation imparting sections are adjusted individually, then the gap S has a relatively long width, on assumption that there are timing shifts in the oscillations imparted by the oscillation imparting sections. With such a gap S, it is possible to avoid a collision between the transport platforms if there are shifts in the operation of imparting the oscillations with each of the oscillation imparting sections, but due to the oscillations of the transport platforms (in particular the oscillations in the transport direction), the width of the gap S may become too broad. As a result, the products W may not be able to pass over this gap S, the products W may fall through the gap S, and depending on the circumstances there may be even the risk that the product W becomes stuck in the gap and the transport of the products W comes to a halt.

By contrast, with the product transport apparatus 1 according to the present embodiment, a single drive motor 300 is provided in order to drive the rotary feeder 100 and the linear feeder 200. That is to say, the input shaft 110 of the rotary feeder 100 and the input shaft 210 of the linear feeder 200 are rotated with a common driving source, and the operation of imparting oscillations on the rotary feeder 100 is more easily synchronized with the operation of imparting oscillations on the linear feeder 200. Moreover, with the present embodiment, the number of oscillations in the compound direction imparted by the rotary feeder 100 is the same as the number of oscillations in the compound direction imparted by the linear feeder 200, so that the timing of the oscillation imparting operation can be matched precisely.

As a result, if the oscillation numbers of oscillations imparted by the rotary feeder 100 and by the linear feeder 200 are to be adjusted in order to adjust the transport speed of the products W, it is possible to adjust each of the oscillations numbers simultaneously by adjusting the rotation speed of the drive motor 300. As a result, since the oscillation imparting operation is accurately synchronized between the rotary feeder 100 and the linear feeder 200, there are no shifts in the timing with which each of the oscillation imparting sections impart the oscillations and also the adjustment of the transport speed becomes easier.

Moreover, even if a gap S between the transport platforms is formed, there is no need to consider shifts between the oscillation imparting operations of each of the oscillation imparting sections, so that the width of the gap S is reduced, the products W will not fall into the gap S, and a suitable transport of the products W can be realized. Furthermore, if the amplitude of the oscillations imparted by each of the rotary feeder 100 and the linear feeder 200 is the same in the transport direction and the vertical direction, then it also becomes possible to minimize the width of the gap S.

Thus, it becomes possible to easily synchronize the oscillation imparting operation of the rotary feeder 100 with the oscillation imparting operation of the linear feeder 200, and as a result, the product transport apparatus 1 transports the products W in a more suitable manner.
(1) Alternative Configurations of the Product Transport Apparatus
   In the above-described embodiment, a product transport apparatus 1 including a transport section 10 with a first transport platform 12 forming a spiral-shaped transport path and a second transport platform 14 forming a linear transport path was explained. With such a product transport apparatus 1, products W moving on the first transport platform 12 are passed on to the second transport platform 14 and are transported to the end in the transport direction of the second transport platform 14 in a state in which they are lined up linearly. In particular, the alignment condition of the products W is more favorable when they move on the second transport platform 14, than when they move on the first transport platform 12, so that a product transport apparatus 1 having such a transport section 10 is capable of providing suitably lined-up products W.

It should be noted, however, that the configuration of the product transport apparatus is not limited to the above-described embodiment (hereafter referred to as "the main example"), but other configuration examples are also possible. In the present section, other configuration examples of the product transport apparatus (that is, the first to the fifth modified examples) are explained. It should be noted that in these modified examples, the oscillation imparting sections (that is, the rotary feeder 100 and the linear feeder 200) have substantially the same configuration, as the oscillation imparting sections of the main example, and perform the same oscillation imparting operation, so that further explanations thereof are omitted. As for the oscillations in the compound direction imparted by the oscillation imparting sections, the number of oscillations, amplitudes in the transport direction and the vertical direction are the same among the oscillation imparting sections.

### First Modified example

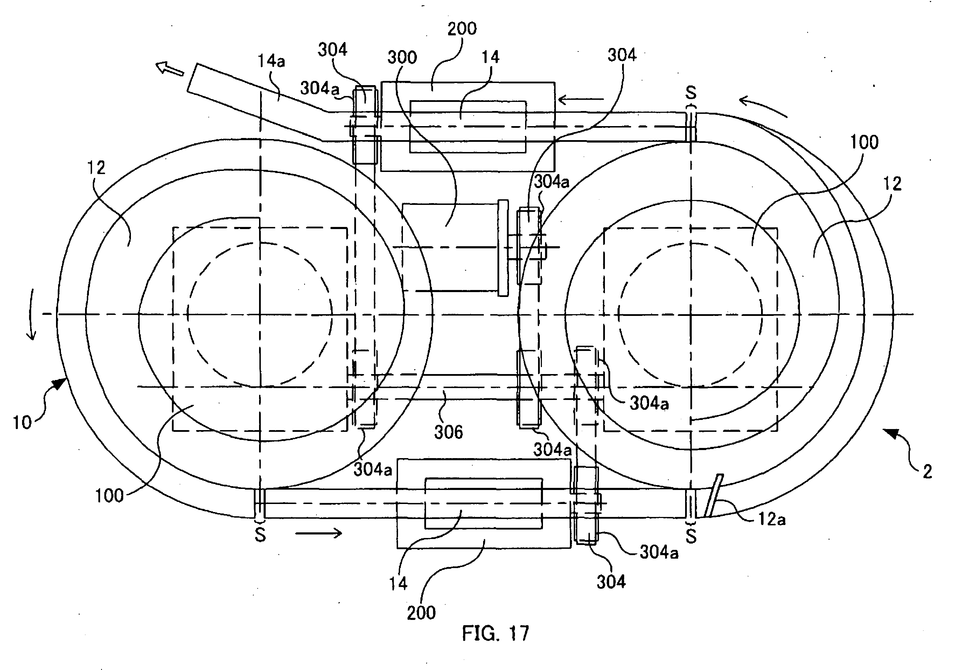

First, a configuration example of a product transport apparatus 2 according to a first modified example is explained with reference to Fig. 17. Fig. 17 is a schematic top view of the product transport apparatus 2 according to the first modified example.

As in the main example, the product transport apparatus 2 according to the first modified example includes a transport section 10 having a plurality of transport platforms lined up in the transport direction. More specifically, the transport section 10 according to this first modified example includes two bowl-shaped first transport platforms 12 and two linear second transport platforms 14. As shown in Fig. 17, these transport platforms are lined up to form an oval transport path (also referred to as "oval path") in the transport direction. It should be noted that in the following, in order to keep the explanations simple, of the two first transport platforms 12, the one that is further on the upstream side in the transport path is referred to as the "upstream-side first transport platform 12", whereas the one that is further on the downstream side in the transport path is referred to as the "downstream-side first transport platform 12". Similarly, of the two second transport platforms 14, the one that is further on the upstream side in the transport path is referred to as the "upstream-side second transport platform 14", whereas the one that is further on the downstream side in the transport path is referred to as the "downstream-side second transport platform 14". As in the main example, gaps S are provided between the first transport platforms 12 and the second transport platforms 14. Furthermore, as shown in Fig. 17, the downstream-side second transport platform 14 is provided with a product retrieval section 14a for retrieving the products W from the transport section 10 at the end in transport direction of the second transport platform 14. This product retrieval section 14a forms a transport path that is bent away from the transport direction of the second transport platform 14. Moreover, a guide wall 12a for guiding the products W to the bottom of the downstream-side first transport platform 12 is provided within the transport path formed by the downstream-side first transport platform 12, as shown in Fig. 17.

A rotary feeder 100 and a linear feeder 200 serving as oscillation imparting sections are arranged below the transport platforms. More specifically, a rotary feeder 100 is arranged below each of the first transport platforms 12 and a linear feeder 200 is arranged below each of the second transport platforms 14. And as in the main example, a single drive motor 300 for driving the plurality of oscillation imparting sections (that is, the two rotary feeders 100 and the two linear feeders 200) are provided, and the driving force from this drive motor 300 is transmitted to each of the oscillation imparting sections through a belt transmission 304. Moreover, in this modified example, as shown in Fig. 17, the two rotary feeders 100 are provided with a common shaft 306 as a common input shaft. That is to say, the first cam mechanism 140 and the second cam mechanism 150 provided in each of the two rotary feeders 100 are supported by the two axial ends of the common shaft 306. It should be noted that three pulleys 304a are supported by the common shaft 306, the pulleys 304a with which the drive motor 300 is provided and the pulleys 304a with which the input shafts 210 of the two linear feeders 200 form pairs, and belts are suspended between these pairs of pulleys 304a.

With the product transport apparatus 2 according to the first modified example configured in this manner, by starting the drive motor 300, the products W stored at the bottom of the upstream-side first transport platform 12 are transported along the spiral-shaped transport path formed by the upstream-side first transport platform 12. Then, the products W that have reached the end of the spiral-shaped transport path are passed to the upstream-side second transport platform 14, and moved along the linear transport path formed by the upstream-side second transport platform 14. Then, the products W that have reached the end of this linear transport path are passed on to the downstream-side first transport platform 12, and subsequently, they collide with the guide wall 12a and are forced to fall to the bottom of the downstream-side first transport platform 12. Here, products W with a flat shape, such as tablets, are flipped over when falling to the bottom of the downstream-side first transport platform 12. Then, the products W that have been flipped over are moved along the spiral-shaped transport path formed by the downstream-side first transport platform 12, and when they reach the end of the spiral-shaped transport path, they are passed to the downstream-side second transport platform 14. Products W that move along the linear transport path formed by the downstream-side second transport platform 14 and reach the end of the product retrieval section 14a are retrieved at the product retrieval section 14a and passed on to the next operation step.

As explained above, the product transport apparatus 2 according to the first modified example has a transport distance that is longer than that of the product transport apparatus 1 of the main example. Moreover, it becomes possible to keep the products W on the transport section 10 for an additional time corresponding to an amount by which the transport path has been prolonged. As a result, it is also possible to arrange various kinds of processes, such as a process of handling or a process of inspecting the products W, during the transport of the products W. It should be noted that since the transport path is oval, the set-up space of the transport section 10 can be made more compact than if the linear transport path is simply extended in the transport direction.

Moreover, if the products W are inspected during the transport of the products W, it becomes possible to inspect them from both sides, namely the top side and the bottom side, because the product W can be flipped over during the transport. Moreover, in this modified example, a guide wall 12a is provided in the transport path formed by the downstream-side first transport platform 12, and the products W are flipped over when falling to the bottom of the downstream-side first transport platform 12. However, there is no limitation to this, and it is also possible to provide a product flipping mechanism (not shown) within the transport path and flip over the products W with the product flipping mechanism without letting them fall to the bottom of the downstream-side first transport platform 12. In this case, it is possible to flip over the products W more accurately. Moreover, the transport order of the products W when inspecting the top side of the products W matches the transport order when inspecting the bottom side. Such a configuration in which the products W are inspected while the transport orders of the products W before and after the flipping over remain the same is particularly advantageous in an inspection operation for validation in a factory manufacturing pharmaceuticals or the like.

### Second Modified Example

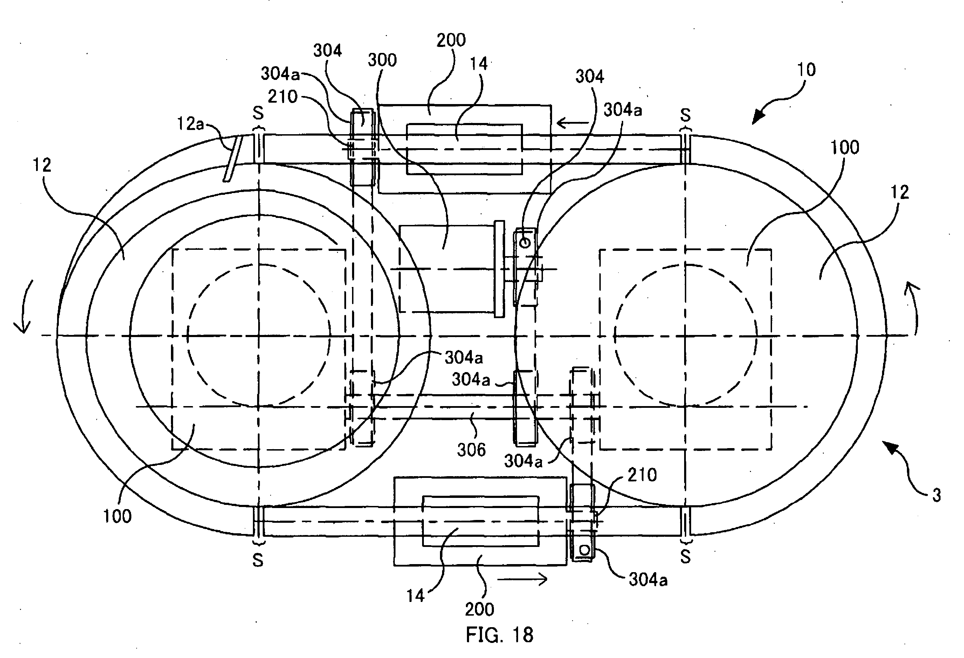

In the first modified example, a product retrieval section 14a is provided at the end of the transport path, but it is also possible that, for example, no such product retrieval section 14a is provided, and a circulating transport path is formed as shown in Fig. 18 (hereinafter referred to as "second modified example"). Fig. 18 is a schematic top view of a product transport apparatus 3 according to a second modified example. An explanation of a product transport apparatus 3 according to this second modified example will follow.

With a product transport apparatus 3 according to the second modified example 3, the products W stored at the bottom of the upstream-side first transport platform 12 are transported from this bottom and revolve around the circulating transport path. Moreover, products W that have returned to the upstream-side first transport platform 12 collide with the guide wall 12a that is provided in the transport path formed by the upstream-side first transport platform 12, are dropped to the bottom of the upstream-side first transport platform 12, and are again transported on the circulating transport path. It should be noted that at the downstream-side first transport platform 12, the products W do not drop to the bottom of the first transport platform 12, but are transported along the outer circumference of that downstream-side first transport platform 12 (in other words, the downstream-side first transport platform 12 forms an arc-shaped transport path).

With the product transport apparatus 3 according to this second modified example, a circulating transport of the products W can be realized, and it becomes easier to implement a repeated inspection operation of products W of the same lot. More specifically, in the product transport apparatus 2 of the first modified example, in order to implement a repeated inspection of the products W of the same lot, the products W first need to be retrieved from the product retrieval section 14a, and then those products W need to be supplied again onto the transport section 10 (more precisely, the bottom of the upstream-side first transport platform 12). By contrast, with the product transport apparatus 3 according to the second modified example, the products W circulate within the transport path, so that it is possible to omit the steps of retrieving the products W and again supplying them onto the transport section 10. Therefore, it becomes easier to implement repeated inspection operations.

### Third Modified example

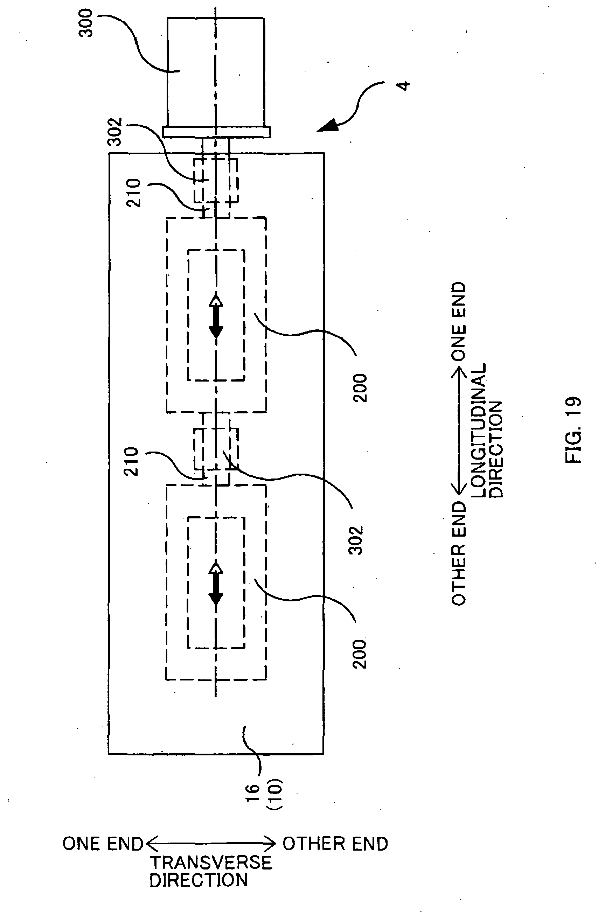

In the main example, the first modified example, and the second modified example, the transport section 10 includes a plurality of transport platforms, and this plurality of transport platforms is lined up in the transport direction. However, there is no limitation to this, and it is also possible that only a single transport platform is provided as the transport section 10. As such a single transport platform, a rectangular transport platform whose longitudinal direction matches the transport direction may be used (hereinafter referred to as the "third modified example"). Referring to Fig. 19, an explanation of a product transport apparatus 4 according to this third modified example will be given. Fig. 19 is a schematic top view of a product transport apparatus 4 according to the third modified example. In Fig. 19, the arrows denote the longitudinal direction and the transverse direction of a third transport platform 16.

In the product transport apparatus 4 according to the third modified example, the transport section 10 is a third transport platform 16, which is a rectangular transport platform whose longitudinal direction matches the transport direction, as explained above. Below this third transport platform 16, two linear feeders 200 are provided as a plurality of oscillation imparting sections. These two linear feeders 200 are lined up linearly in the longitudinal direction of the third transport platform 16 (that is, the transport direction of the products W on the third transport platform 16). More specifically, the input shafts 210 with which each of the two linear feeders 200 are provided and the rotation shaft of the drive motor 300 are arranged such that they lie on the same axis, extending in the longitudinal direction of the third transport platform 16. It should be noted that for the sake of simplicity, in the following explanations, of the two linear feeders 200, the linear feeder 200 at one end side in the longitudinal direction of the third transport platform 16 is referred to as the "linear feeder 200 on one end side", whereas the linear feeder 200 at the other end side in the longitudinal direction of the third transport platform 16 is referred to as the "linear feeder 200 on the other end side".

Also in this modified example, as in the main example, the two linear feeders 200 are driven by a single drive motor 300. Moreover, in the linear feeder 200 on one end side, the input shaft 210 is provided in a state so that it passes through the housing 230. As shown in Fig. 19, one end portion in the axial direction of the input shaft 210 of the linear feeder 200 on one end side is coupled to the drive motor 300 through a shaft coupling 302, whereas the other axial end portion is coupled to the input shaft 210 of the linear feeder 200 on the other end side through a shaft coupling 302.

With a product transport apparatus 4 according to the third modified example configured in an above manner, when the drive motor 300 is started, the third transport platform 16 oscillates in the longitudinal direction and the vertical direction of the third transport platform 16 (more precisely, in a compound direction of the longitudinal direction and the vertical direction) owing to the cooperation of the two linear feeders 200. Thus, the products W placed on the third transport platform 16 are transported along the longitudinal direction of the third transport platform 16 to the other end side in the longitudinal direction.

Here, the transport section 10 includes a plurality of transport platforms, and if a gap S is formed between the transport platforms, the width of this gap S can be reduced by causing each of the plurality of oscillation imparting sections be driven with a single drive motor 300, as described above. That is to say, if there is a gap S between the transport platforms, a configuration driving the plurality of oscillation imparting sections with a single drive motor 300 is advantageous.

On the other hand, with the third modified example, the transport section 10 is a single third transport platform 16, so that needless to say, transport irregularities may occur that are caused by deflection of the third transport platform 16 in the longitudinal direction and the like, even without the formation of a gap S. That is to say, when an even oscillation state cannot be attained in the various sections of the third transport platform 16, irregularities occur in the product transport speed in the various sections, and there is a risk that the products W cannot be suitably transported. Here, if the two linear feeders 200 are lined up linearly in the longitudinal direction of the third transport platform 16, such transport irregularities are suppressed, but when there is a shift in the oscillation imparting operations of the two linear feeders 200, there is the risk of rattling of the third transport platform 16. By contrast, with the third modified example, since each of the two linear feeders 200 is driven by a single drive motor 300, each of the oscillation imparting operations of the two linear feeders 200 are easily synchronized, so that rattling of the third transport platform 16 can be easily suppressed. As a result, it becomes possible to realize an ideal transport of the products W. That is to say, the configuration of the present invention is also advantageous when the transport section 10 is a rectangular third transport platform 16 whose longitudinal direction matches the transport direction.

### Fourth Modified example

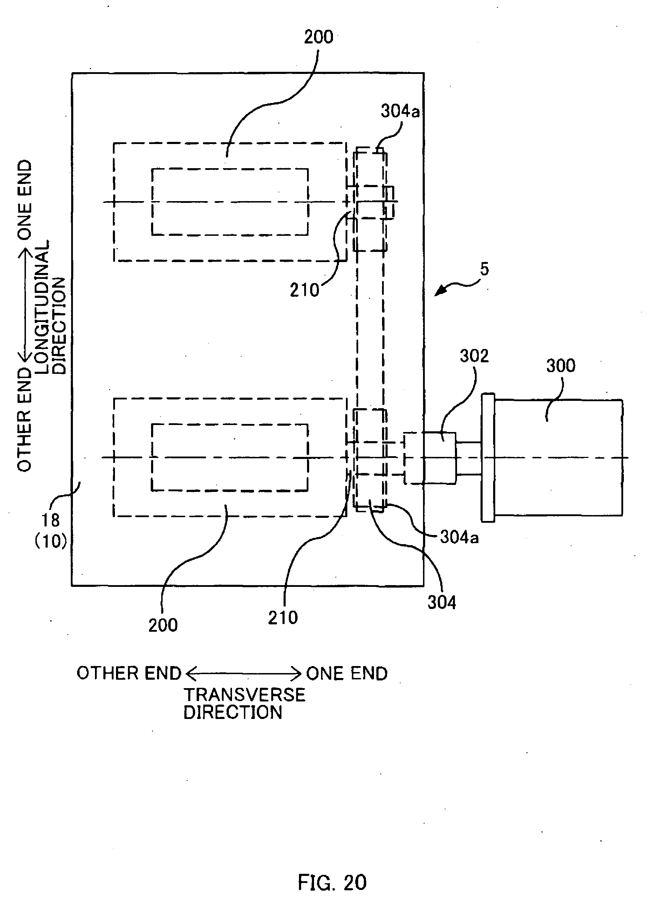

The third modified example was explained as an example in which the transport section 10 is a third transport platform 16 whose longitudinal direction matches the transport direction. However, the transport section 10 is not limited to the shape of the third modified example. For example, it is also possible that the transport section 10 is a rectangular transport platform whose transverse direction matches the transport direction (hereinafter referred to as the "fourth modified example"). Referring to Fig. 20, an explanation of such a product transport apparatus 5 according to the fourth modified example wil follow. Fig. 20 is a schematic top view of this product transport apparatus 5 according to the fourth modified example. In Fig. 20, the arrows denote the longitudinal direction and the transverse direction of the fourth transport platform 18.

In the product transport apparatus 5 according to the fourth modified example, the transport section 10 is a fourth transport platform 18, which is a rectangular transport platform whose transverse direction matches the transport direction, as explained above. Below this fourth transport platform 18, two linear feeders 200 are provided, as in the third modified example. These two linear feeders 200 are lined up linearly in the longitudinal direction of the fourth transport platform 18. More specifically, the two linear feeders 200 are lined up at substantially the same position in the transverse direction of the fourth transport platform 18. It should be noted that for the sake of simplicity, in the following explanations, of the two linear feeders 200, the linear feeder 200 at the one end side in the longitudinal direction of the fourth transport platform 18 is referred to as the "linear feeder 200 on the one end side", whereas the linear feeder 200 at the other end side in the longitudinal direction of the fourth transport platform 18 is referred to as the "linear feeder 200 on the other end side".

Also in this modified example, as in the main example, the two linear feeders 200 are driven by a single drive motor 300. Moreover, the input shaft 210 of the linear feeder 200 on the one end side is coupled to the drive motor 300 by a shaft coupling 302. The input shaft 210 of the linear feeder 200 on the one end side and the input shaft 210 of the linear feeder 200 on the other end side both support the pulleys 304a, and a belt is suspended between the pulleys 304a.

With a product transport apparatus 5 according to the fourth modified example configured in an above manner, when the drive motor 300 is started, the fourth transport platform 18 oscillates in the transverse direction and the vertical direction of the fourth transport platform 18 (more precisely, in a compound direction of the transverse direction and the vertical direction) owing to the cooperation of the two linear feeders 200. Moreover, the products W placed on the fourth transport platform 18 are transported in the transverse direction of the fourth transport platform 18 to the other end side in the transverse direction. Thus, the fourth transport platform 18 has a broad structure with respect to the transport direction, so that the product transport apparatus 5 according to the fourth modified example transports the products W in a state in which they are lined up in the longitudinal direction of the fourth transport platform 18, so that a large amount of products W can be transported at the same time.

Moreover, by lining up two linear feeders 200 linearly in the longitudinal direction of the fourth transport platform 18, transport irregularities and rattling of the fourth transport platform 18 are suppressed, as in the third modified example. Consequently, the configuration of the present invention is also advantageous when the transport section 10 is a rectangular fourth transport platform 18 whose transverse direction matches the transport direction.

### Fifth Modified example

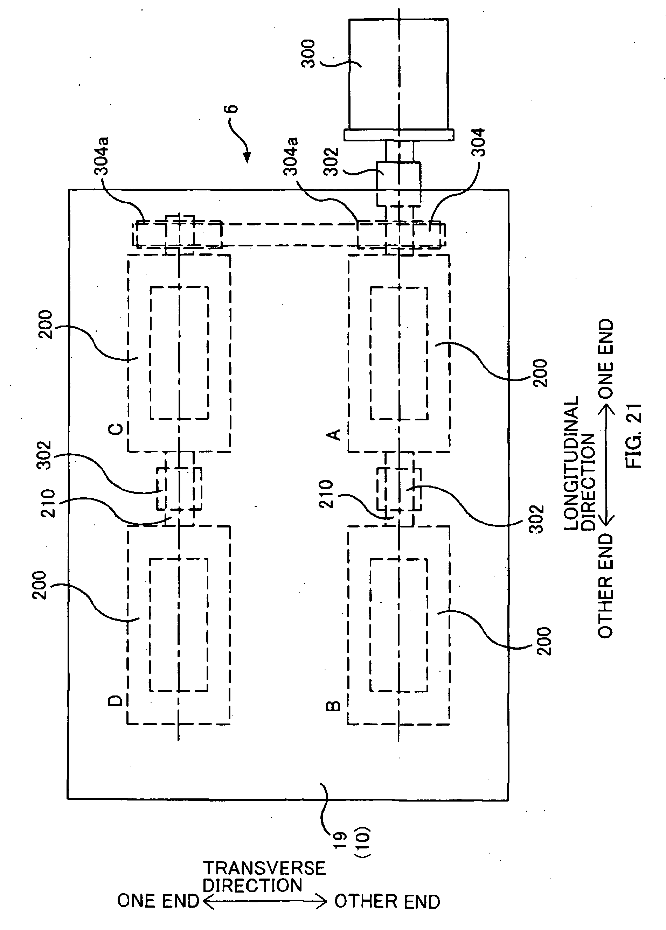

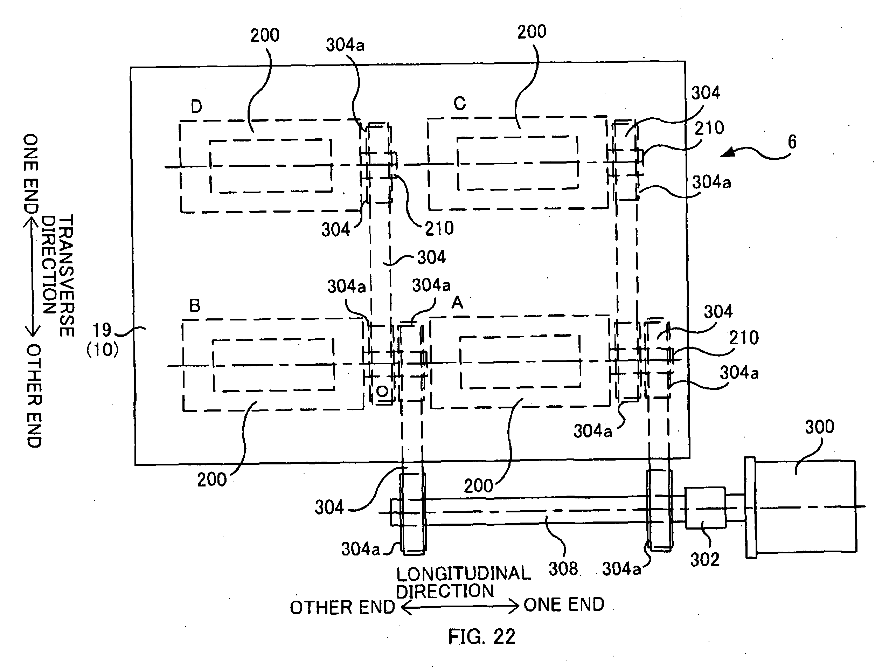

In the fourth modified example, a case was explained in which the transport section 10 is a fourth transport platform 18 that is broad with respect to the transport direction, and whose transverse direction matches the transport direction. However, it is also possible that the transport section 10 is a transport platform that is broad with respect to the transport direction and whose longitudinal direction matches the transport direction (hereafter referred to as the "fifth modified example"). In the following, a product transport apparatus 6 according to the fifth modified example is explained with reference to Figs. 21 and 22. Fig. 21 is a schematic top view of a product transport apparatus 6 according to the fifth modified example. Fig. 22 is a view of the modified example relating to the transmission mechanism of the driving force from the drive motor 300 in the product transport apparatus 6 according to the fifth modified example. In Figs. 21 and 22, the arrows denote the longitudinal direction and the transverse direction of the fifth transport platform 19.

In the product transport apparatus 6 according to the fifth modified example, the transport section 10 is a fifth transport platform 19 which is a rectangular transport platform that is wide with respect to the transport direction and whose longitudinal direction matches the transport direction. In the fifth modified example, four linear feeders 200 are arranged below the fifth transport platform 19. As shown in Fig. 21, of the four linear feeders 200, two are arranged on the one end side and the remaining on the other end side in the transverse direction of the fifth transport platform 19. Furthermore, each of the two linear feeders 200 are lined up linearly in the longitudinal direction of the fifth transport platform 19. It should be noted that in order to keep the explanations simple, in the following explanations the positions of the four linear feeders 200 are marked with the letters A to D in Fig. 21, and the linear feeders 200 are specified by the letters assigned to those positions (for example, the linear feeder 200 arranged at the position with the letter A is referred to as "linear feeder 200 at position A").

In this modified example, the linear feeder 200 at position A and the linear feeder 200 at position C are each arranged in a state in which the input shaft 210 passes through the housing 230. Moreover, the one end portion in the axial direction of the input shaft 210 of the linear feeder 200 at position A is coupled to the drive motor 300 by an axial coupling 302. That is to say, the input shaft 210 of the linear feeder 200 at position A and the rotation shaft of the drive motor 300 are lined up coaxially in the longitudinal direction of the fifth transport platform 19. Moreover, the linear feeder 200 at position A and the linear feeder 200 at position C are coupled by a belt that is suspended between pulleys 304, which are supported at the one end portion in the axial direction of the input shafts 210 and which are provided to each of the linear feeders. Moreover, the other end portion in the axial direction of the input shaft 210 of the linear feeder 200 at position A is coupled to the input shaft 210 of the linear feeder 200 at position B through a shaft coupling 302. Similarly, also the other axial end portion of the input shaft 210 of the linear feeder 200 at position C is coupled to the input shaft 210 of the linear feeder 200 at position D through a shaft coupling 302. Thus, as in the main and other examples, in this modified example, four linear feeders 200 are driven by a single drive motor 300 as well.

With a product transport apparatus 6 according to the fifth modified example configured in the above manner, owing to the cooperation of the four linear feeders 200, the fifth transport platform 19 oscillates in the longitudinal direction and the vertical direction of the fifth transport platform 19 (more precisely, in a compound direction of the longitudinal direction and the vertical direction). Thus, the products W that are placed on the fifth transport platform 19 are transported in the longitudinal direction of the fifth transport platform 19 to the other end side in longitudinal direction.

Moreover, with the product transport apparatus 6 according to the fifth modified example, it is possible to transport a large amount of products W at once, while restricting the deflection of the fifth transport platform 19 in the longitudinal direction and the transverse direction. And as in the third modified example and the fourth modified example, -transport irregularities and rattling of the fifth transport platform 19 are suppressed as well. That is to say, the effect of the present invention is also advantageous when the transport section 10 is a rectangular fifth transport platform 19 which is broad with respect to the transport direction and whose longitudinal direction matches the transport direction.

It should be noted that the configuration for transmitting the driving force from the drive motor 300 to each of the linear feeders 200 is not limited to the configuration shown in Fig. 21 and may also have the configuration shown in Fig. 22, for example. More specifically, the drive shaft 308 coupled to the rotation shaft of the drive motor 300 by a shaft coupling 302 and each of the input shafts 210 of the linear feeder 200 at position A and the linear feeder 200 at position B are coupled via a belt transmission 304. Moreover, the input shafts 210 of each of the linear feeder 200 at position A and the linear feeder 200 at position C are coupled by a belt transmission 304 and also the input shafts 210 of the linear feeder 200 at position B and the linear feeder 200 at position D are coupled by a belt transmission 304. With such a configuration, when the drive motor 300 is driven, the drive shaft 308 and the pulleys 304a fastened to the drive shaft 308 rotate integrally, so that the drive force is transmitted from the drive motor 300 via the belt transmission 304 to the input shapts 210 of each of the four linear feeders 200.

### (1) Other Embodiments

In the foregoing, a product transport apparatus according to the present invention was explained based on the first embodiment, but the above-described first embodiment of the present invention is merely for the purpose of a clear understanding of the present invention and is not to be interpreted as limiting the present invention. The invention can of course be altered and improved without departing from the scope of the appended claims. The first embodiment was explained for the case that various types of transport platforms, such as the first transport platform 12 and the second transport platform 14, are fastened to the output sections 120 and 220 of each of the rotary feeder 100 and the linear feeder 200. That is to say, the transport platforms oscillate integral with the output sections 120 and 220, but there is no limitation to this. For example, it is also possible that even though the transport platforms are placed on the output sections 120 and 220, they are not fastened to the output sections 120 and 220. However, if the oscillations of the oscillation imparting sections are transmitted to the transport platforms through the output sections 120 and 220, then the oscillations are properly transmitted if the transport platforms are fastened to the output sections 120 and 220. With regard to this aspect, the first embodiment is preferable.

In the first embodiment, the first cams 142 and 242 and the second cams 152 and 252 of each of the rotary feeder 100 and the linear feeder 200 are supported by the input shafts 110 and 210, and when the input shafts 110 and 210 rotate, they rotate integrally, but there is no limitation to this. For example, it is also possible to arrange the rotation shaft supporting the first cams 142 and 242 and rotating intergrally with these first cams 142 and 242 and the rotation shaft supporting the second cams 152 and 252 and rotating integrally with these second cams 152 and 252 as different shafts. However, if the first cams 142 and 242 and the second cams 152 and 252 in each of the feeders are all supported by the input shafts 110 and 210, then the rotation of the first cams 142 and 242 can be easily synchronized with the rotation of the second cams 152 and 252. Therefore, each of the rotary feeder 100 and the linear feeder 200 tend to impart such oscillations that the phases of the transport platforms in the transport direction and in the vertical direction change as shown in Fig. 9. That is to say, it becomes easier to impart on the transport platforms oscillations that enhance the phenomenon of relative slipping of the products W, and as a result, the products W can be transported more properly. With regard to this aspect, the first embodiment is preferable.

Moreover, the first embodiment was explained for the case that a plurality of oscillation imparting sections, such as the rotary feeder 100 or the linear feeder 200, are provided, and the first cams 142 and 242 of each of the oscillations imparting sections are provided with such cam profiles that the amplitudes of the oscillations imparted by each of those oscillation imparting sections in the transport direction are the same among the oscillation imparting sections. Furthermore, the second cams 152 and 252 of each of the oscillation imparting sections are provided with such camprofiles that the amplitudes of the oscillations imparted by each of those oscillation imparting sections in the vertical direction are the same among the oscillation imparting sections. However, there is no limitation to this, and it is also possible that the amplitudes of the oscillations imparted by each of the oscillation imparting sections in one direction of either the transport direction or the vertical direction are not the same among the oscillation imparting sections. Moreover, it is also possible that the amplitudes of the oscillations imparted by each of the oscillation imparting sections are different among the oscillation imparting sections with respect to both the transport direction and the vertical direction.

As explained above, the transport speed of the products W depends on the amplitudes of the oscillations imparted by each of the oscillation imparting sections in the transport direction and the vertical direction. Therefore, if the amplitudes of the oscillations imparted by each of a plurality of oscillation imparting sections with respect to the transport direction and the vertical direction are the same among the oscillation imparting sections, then it becomes possible to suppress transport irregularities, because a uniform transport speed is attained in the various sections of the transport section 10.

Moreover, if the transport section 10 includes a plurality of transport platforms (for example, the first transport platform 12 and the second transport platform 14) and a gap S is formed between the transport platforms, then, as explained above, the width of this gap S is minimized if the amplitudes are the same among the oscillation imparting sections. That is to say, if the amplitudes differ among the oscillation imparting sections, it is necessary to give consideration to the difference in amplitudes among the oscillation imparting sections when setting the width of the gap S, whereas if the amplitudes are the same among the oscillation imparting sections, then it is possible to reduce the necessary width of the gap S to a minimum, without considering amplitude differences.

In particular if the amplitude in the vertical direction is the same among the oscillation imparting sections, then the phases in the vertical direction of the various components of the transport section 10 are easy to match. Therefore, suitable transport of the products W becomes possible without undulations (formation of a level difference in the transport path when there are shifts in the phase in the vertical direction of the various components of the transport section 10) in the transport path formed by the transport section 10. With regard to this aspect, the above first embodiment is preferable.

## Claims

1. A product transport apparatus comprising:
a transport section (10) that oscillates in a transport direction and a vertical direction in order to transport a product;
a plurality of oscillation imparting sections (100, 200);
and a single driving source that drives each of the plurality of oscillation imparting sections;
**characterised in that** each of the plurality of oscillation imparting sections has a first cam mechanism for causing the transport section to oscillate in the transport direction and a second cam mechanism (150, 250) for causing the transport section to oscillate in the vertical direction.

2. A product transport apparatus according to claim 1,
wherein the number of oscillations imparted by each of the plurality of oscillation imparting sections (100, 200) in the transport direction and the vertical direction is the same among the oscillation imparting sections.

3. A product transport apparatus according to claim 2,
wherein each of the plurality of oscillation imparting sections (100,200) includes:
a housing (130) for containing the first cam mechanism (140, 240) and the second cam mechanism (150, 250);
an input shaft (110) rotatably supported by the housing in order to drive the first cam mechanism (140, 240) and the second cam mechanism, and
an output section (120) that fastens and supports the transport section above the output section, the output section being supported by the housing so that it can oscillate in the transport direction and the vertical direction, and
wherein the first cam mechanism (140,240) and the second cam mechanism (140,240) oscillate the output section (120) and the transport section (10) integrally.

4. A product transport apparatus according to claim 3,
wherein a rotatable first cam (142) of the first cam mechanism (140, 240) and a rotatable second cam (152) of the second cam mechanism (150,250) are supported by the input shaft, and the first cam and the second cam rotate integrally with the input shat(110).

5. A product transport apparatus according to claim 4,
wherein the first cam (142)of each of the plurality of oscillation imparting sections (100,200) has such a cam profile that the amplitude in the transport direction of the oscillations imparted by each of the plurality of oscillation imparting sections (100,200) is the same among the oscillation imparting sections.

6. A product transport apparatus according to claim 5,
wherein the second cam (152) of each of the plurality of oscillation imparting sections (100,200) has such a cam profile that the amplitude in the vertical direction of the oscillations imparted by each of the plurality of oscillation imparting sections (100,200) is the same among the oscillation imparting sections.

7. A product transport apparatus according to any of claims 2 to 6,
wherein the transport section (10) includes a plurality of transport platforms (12,14) that are lined up in the transport direction,
a gap (S) is formed between the neighboring transport platforms (12.14), and
an oscillation imparting section (100,200) is provided for each of the plurality of transport platforms.

8. A product transport apparatus according to claim 7,
wherein the plurality of transport platforms (12,14) are lined up in the transport direction such that they form an oval path.

9. A product transport apparatus according to any of claims 2 to 6,
wherein the transport section (10) is a rectangular transport platform (12,14)whose longitudinal direction coincides with the transport direction, and
the plurality of oscillation imparting sections (100,200) are lined up in a straight line in the longitudinal direction of the transport platform (12,14).

10. A product transport apparatus according to any of claims 2 to 6,
wherein the transport section (10) is a rectangular transport platform (12,14) whose transverse direction coincides with the transport direction, and
the plurality of oscillation imparting sections (100,200) are lined up in a straight line in the longitudinal direction of the transport platform (12,14).

## Patentansprüche

1. Ein Produktbeförderungsgerät umfassend:
einen Beförderungsabschnitt (10), der in einer Beförderungsrüchtung und in einer vertikalen Richtung vibriert, um ein Produkt zu befördern;
eine Mehrzahl an vibrationsübertragenden Abschnitten (100, 200); und eine einzelne Antriebsquelle, die jeden von der Mehrzahl an vibrationsübertragenden Abschnitten antreibt;
**gekennzeichnet dadurch, dass**
jeder von der Mehrzahl an vibrationsübertragenden Abschnitten einen ersten Mitnehmennechamismus aufweist, um zu bewirken, dass der Beförderungsabschnitt in der Beförderungsrichtung vibriert und einen zweiten Mitnehmermechanismus (150, 250), um zu bewirken, dass der Beförderungsabschnitt in der vertikalen Richtung vibriert.

2. Ein Produktbeförderungsgerät gemäß Anspruch 1,
wobei die Anzahl von, Vibrationen übertragen durch jeden von der Mehrzahl an vibrationsübertragenden Abschnitten (100, 200) in der Befordenlngsrichtung und in der vertikalen Richtung etwa die gleiche ist wie die der vibrationsübertragenden Abschnitte.

3. Ein Produktbeförderungsgerät gemäß Anspruch 2,
wobei jeder von der Mehrzahl an vibrationsübertragenden Ab schnitten (100, 200) beinhaltet:
ein Gehäuse (130) zum Aufnehmen des ersten Mitnehmermechanismus (140, 240) und des zweiten Mitnehmermechanismus (150,250);
eine Eingangswelle (110) mittels des Gehäuses drehbar gelagert, um den ersten Mitnehmermechanismus (140, 240) und den zweiten ersten Mitnehmermechanismus anzutreiben, und
einen Ausgangsabschnitt (120), der den Beförderungsabschnitt oberhalb des Ausgangsabsthnitts befestigt und lagert, der Ausgangsabschnitt wird mittels des Gehäuses gelagert, so dass er in der Beförderungsrichtung und in der vertikalen Richtung vibrieren kann,
und
wobei der erste Mitnehmermechanismus (140, 240) und der zweite Mitnehmermechanismus (150, 250) den Ausgangsabschnitt (120) und den Eeförderungsabschnitt (10) gemeinsam vibrieren.

4. Ein Produktbeforderutigsgerät gemäß Anspruch 3,
wobei ein drehbarer erster Mitnehmer (142) von dem ersten Mitnehmermechanismus (140, 240) und ein drehbarer zweiter Mitnehmer (152) von dem zweiten Mitnehmermechanismus (150, 250) mittels der Eingangswelle gelagert werden, und der erste Mitnehmer und der zweite Mitnehmer sich gemeinsam mit der Eingangswelle (110) drehen.

5. Ein Produktbeförderungsgerät gemäß Anspruch 4,
wobei der erste Mitnehmer (142) von jedem von der Mehrzahl an vibrationsubertragenden Abschnitten (100, 200) solch ein Mitnehmerprofil aufweist, dass die Amplitude in der Beförderungsrichtung von den Vibrationen übertragen durch jeden von der Mehrzahl an vibrationsübertragenden Abschnitten (100, 200) etwa die gleiche wie die der vibrationsübertragenden Abschnitte ist.

6. Ein Produktbeförderungsgerät gemäß Anspruch 5,
wobei der zweite Mitnehmer (152) von jedem von der Mehrzahl an vibrationsübertragenden Abschnitten (100, 200) solch ein Mitnehmerprofil aufweist, dass die Amplitude in der vertikalen Richtung von den Vibrationen übertragen durch jeden von der Mehrzahl an vibrationsübertragenden Abschnitten (100, 200) etwa die gleiche wie die der vibrationsübertragenden Abschnitte ist.

7. Ein Produktbeförderungsgerät gemäß einem der Ansprüche 2 bis 6, wobei der Beförderungsabschnitt (10) eine Mehrzahl an Beförderungsunterlagen (12, 14) beinhaltet, die in der Beförderungsrichtung aufgereiht sind,
eine Lücke (5) zwischen den benachbarten Beforderungsunterlagen (12, 14) gebildet ist,
ein vibrationsübertragender Abschnitt (100, 200) für jede von der Mehrzahl an Beförderungsunterlagen bereitgestellt wird.

8. Ein Produktbeförderungsgerät gemäß Anspruch 7,
wobei die Mehrzahl an Beförderungsunterlagen (12, 14) in der Beförderungsrichtung aufgereiht sind, so dass sie einen ovalen Pfad bilden.

9. Ein Produlrtheförderungsgerät gemäß einem der Ansprüche 2 bis 6, wobei die Beförderungsrichtung (10) eine rechteckige Beförderungunterlage (12, 14) ist, deren Längsrichtung mit der Beförderungrichtung übereinstimmt, und
die Mehrzahl an vibrationsübertragenden Abschnitten (100, 200) in einer geraden Reihe in der Längsrichtung der Beförderungsunterlage (12, 14) aufgereiht sind.

10. Ein Produktbeförderungsgerät gemäß einem der Ansprüche 2 bis 6, wobei der Beförderungsabschnitt (10) eine rechteckige Beförderungsunterlage (12, 14) ist, deren Querrichtung mit der Beförderungsriehtung übereinstimmt, und
die Mehrzahl an vibrationsübertragenden Abschnitte (100, 200) in einer geraden Reihe in der Längsrichtung der Befürderungsunterlage (12, 14) aufgereiht sind.

## Revendications

1. Appareil de transport de produit comprenait :
une section de transport (10) qui oscille dans une direction de transport et une direction verticale afin de transporter un produit ;
une pluralité de sections communiquant une oscillation (100, 200) ;
et une source unique d'entraînement qui entraîne chaque section de la pluralité de sections communiquant une oscillation ;
**caractérisé en ce que** chaque section de la pluralité de sections communiquant une oscillation comporte un premier mécanisme de came pour amener la section de transport à osciller dans la direction de transport et un second mécanisme de came (150, 250) pour amener la section de transport à osciller dans la direction verticale.

2. Appareil de transport de produit selon la revendication 1, dans lequel le nombre d'oscillations communiquées par chaque section de la pluralité de sections communiquant une oscillation (100, 200) dans la direction de transport et la direction verticale est le même parmi les sections communiquant une oscillation.

3. Appareil de transport de produit selon 1a revendication 2, dans lequel chaque section de la pluralité de sections communiquant une oscillation (100, 200) comprend :
un logement (130) pour contenir le premier mécanisme de came (140, 240) et le second mécanisme de came (150, 250) ;
un arbre d'entrée (110) supporté en rotation par le logement afin d'entraîner le premier mécanisme de came (140, 240) et le second mécanisme de came ; et
une section de sortie (120) qui fixe et supporte la section de transport au-dessus de la section de sortie, la section de sortie étant supportée par le logement de manière à pouvoir osciller dans la direction de transport et la direction verticale, et
où le premier mécanisme de came (140, 240) et le second mécanisme de came (150, 250) font osciller la section de sortie (120) et la section de transport (10) d'un seul tenant.

4. Appareil de transport de produit selon la revendication 3, dans lequel une première came rotative (142) du premier mécanisme de came (140, 240) et une seconde came rotative (152) du second mécanisme de came (150, 250) sont supportées par l'arbre d'entrée, et la première came et la seconde came tournent d'un seul tenant avec l'arbre d'entrée (110).

5. Appareil de transport de produit selon la revendication 4, dans lequel la première came (142) de chaque section de la pluralité de sections communiquant une oscillation (100, 200) a un profil de came tel que l'amplitude dans la direction de transport des oscillations communiquées par chaque section de la pluralité de sections communiquant une oscillation (100, 200) est la même parmi les sections communiquant une oscillation.

6. Appareil de transport de produit selon la revendication 5, dans lequel la seconde came (152) de chaque section de la pluralité de sections communiquant une oscillation (100, 200) a un profil de came tel que l'amplitude dans la direction verticale des oscillations communiquées par chaque section de la pluralité de sections communiquant une oscillation (100, 200) est la même parmi les sections communiquant une oscillation.

7. Appareil de transport de produit selon l'une quelconque des revendications 2 à 6, dans lequel la section de transport (10) comprend une pluralité de plateformes de transport (12, 14) qui sont alignées dans la direction de transport,
un espace (s) est formé entre les plateformes de transport voisines (12, 14), et
une section communiquant une oscillation (100, 200) est prévue pour chaque plateforme de la pluralité de plateformes de transport.

8. Appareil de transport de produit selon la revendication 7, dans lequel la pluralité de plateformes de transport (12, 14) sont alignées dans la direction de transport de manière à former une trajectoire ovale.

9. Appareil de transport de produit selon l'une quelconque des revendications 2 à 6, dans lequel la section de transport (10) est une plateforme de transport rectangulaire (12, 14) dont la direction longitudinale coïncide avec la direction de transport, et
la pluralité de sections communiquant une oscillation (100, 200) sont alignées en une ligne droite dans la direction longitudinale de la plateforme de transport (12, 14).

10. Appareil de transport de produit selon l'une quelconque des revendications 2 à 6, dans lequel la section de transport (10) est une plateforme de transport rectangulaire (12, 14) dont la direction transversale coïncide avec la direction de transport, et
la pluralité de sections communiquant une oscillation (100, 200) sont alignées en une ligne droite dans la direction longitudinale de la plateforme de transport (12, 14).
